# EUROPEAN PATENT APPLICATION

(11) **EP 2 116 931 A1**
(43) Date of publication of application: **11.11.2009**
(21) Application number: 07831747.6
(22) Date of filing: 13.11.2007
(51) Int. Cl.: G06F 3/12, B41J 29/00, B41J 29/38, H04N 1/00

(54) **PRINTING CONTROL SYSTEM, READING TERMINAL, BROWSING PROGRAM, PRINTER, PRINTING PROGRAM, AUTHENTICATION SERVER AND AUTHENTICATION PROGRAM**

(30) Priority: 30.01.2007 JP 2007019217
(71) Applicant: Brother Kogyo Kabushiki Kaisha, Nagoya-shi, Aichi 467-8561 (JP)
(72) Inventor: KONDO, Yoshiyuki, Nagoya-shi Aichi 467-8561 (JP)
(74) Representative: Kopp, Stephan
(86) International application number: PCT/JP2007/072017
(87) International publication number: WO 2008/093460

(57) **Abstract**

If a user connects a viewing terminal to a MFP and issues a command for content that is being viewed on the viewing terminal to be printed in the currently connected MFP, a printing request is transmitted to the MFP. In the MFP, a MFP ID of the MFP is appended to the printing request, which is then transmitted to an authentication server. In the authentication server, a determination is made as to whether or not printing of the content will be permitted for the combination of the viewing terminal and the MFP. If the combination of a viewing terminal ID and the MFP ID is stored in an authentication table (YES at S231), and if a type that is associated with the content for which the printing request has been made is registered in the authentication table as a type for which printing is permitted (YES at S232), a printing reply (303) that includes information for performing printing in the MFP is created (S233) and is transmitted to the MFP (S234). Then printing is performed in the MFP (FIG. 26, S 145).

## Description

### Technical Field

The present invention relates to a printing control system, a viewing terminal, a viewing program, a printing apparatus, a printing program, an authentication server, and an authentication program, and more specifically to a printing control system that controls printing of content for a combination of an output destination printing apparatus and a user, as well as a viewing terminal, a printing apparatus, and an authentication server that configure the printing control system, and a viewing program, a printing program, and an authentication program that operate the respective apparatuses.

### Background Art

Conventionally, A service is known to have been proposed that performs printing of content, on a printing apparatus that is located apart from an apparatus in which the content (text data, still image data, and the like) that a user wants to print is stored, in order to handle a case where the user wants to perform printing from an apparatus such as a mobile apparatus or the like that does not have a printing function, as well as a case where a user wants to perform printing on a special printing apparatus with advanced functions.

For example, according to a print ordering method of an invention that is described in Patent Document 1, digital image data is stored in a personal computer that is owned by a customer. The digital image data in the customer's personal computer is transmitted over the Internet to a laboratory server that is connected to a printer that prints a photograph. The laboratory server prints the received digital image data on the printer. The printed photographic print is delivered to the customer by mail or is handed to the customer in a shop.

In another example, according to a print surrogate service method of an invention that is described in Patent Document 2, a customer uses a mobile telephone that the customer owns to connect to a server and transmit a user ID, and user authentication is performed. The customer transmits to the server a printing request and position information for the mobile telephone (using GPS). Based on the position information, the server creates a list of print surrogate shops (printers) that are in the vicinity of the customer's current position and indicates the list on the customer's mobile telephone. The customer selects a printer from the list and transmits the content to be printed to the server. The server then outputs the content to be printed to the printer that is selected.

Furthermore, in recent years, systems have been provided that take content (text data, music data, still image data, moving image data, programs, and the like) that is provided over the Internet and download it to personal computers and mobile terminals that are owned by individuals, who then use the content. In this form of system, a service is provided that sells the content by charging a fee when the content is downloaded. Among the services that are provided, a system has been proposed in which, even if the content is provided in the form of content that can be printed, restrictions are imposed on printing, such as the content can be printed only a specified number of times, or printing is not allowed. In these sorts of cases, when there is a printing request, authentication is performed to determine whether or not printing is permitted.
Patent Document 1: Japanese Laid-Open Patent Publication No. 2002-175242
Patent Document 2: Japanese Laid-Open Patent Publication No. 2002-132462

In the print ordering method of the invention that is described in Patent Document 1 and in the print surrogate service method of the invention that is described in Patent Document 2, the authentication is performed when printing will be performed by a printer in a location that is some distance from the terminal that the user (the customer) operates, but the authentication only authenticates the user. However, in a case where printing of content is provided as a service, it is not only desired that the user will be authenticated, but also that printing will be controlled for a combination of an output destination printing apparatus and the user. Authenticating only the user, as is done in the print ordering method of the invention that is described in Patent Document 1 and in the print surrogate service method of the invention that is described in Patent Document 2, creates a problem in that it is not possible to control whether or not printing of the content is permitted for the combination of the output destination printing apparatus and the user.

### Disclosure of the Invention

The present disclosure addresses the problem that is described above and provides a printing control system that controls whether or not it permits printing of content for a combination of an output destination printing apparatus and a user, as well as a viewing terminal, a printing apparatus, and an authentication server that configure the printing control system, and a viewing program, a printing program, and an authentication program that operate the respective devices.

According to the present disclosure, a printing control system includes a plurality of printing apparatuses, an authentication server, and a viewing terminal, each of the printing apparatuses being provided with printing means for performing printing, the authentication server performing authentication for printing, the printing apparatuses and the authentication server being connected through a network, and the viewing terminal being provided with a display screen that displays content and being connectable to the printing apparatuses. The viewing terminal includes display data storage means for storing display data for displaying the image on the display screen, user identification information acquisition means for acquiring user identification information that identifies a user, printing apparatus identification information acquisition means for acquiring printing apparatus identification information that identifies the printing apparatus that is an output destination where printing of the content will be performed, print command means for issuing a command to print the content for which the display data is stored in the display data storage means, and viewing terminal connecting means for connecting to the printing apparatuses. The viewing terminal also includes print request transmission means for transmitting from the viewing terminal connecting means to the printing apparatuses, in a case where the command to print has been issued by the print command means, content identification information that identifies the content for which the command to print has been issued and the printing apparatus identification information that has been acquired by the printing apparatus identification information acquisition means. Each of the printing apparatuses includes first printing apparatus connecting means for connecting to the viewing terminal, second printing apparatus connecting means for connecting to the authentication server through the network, and user identification information acquisition means for acquiring from the viewing terminal the user identification information that identifies the user. Each of the printing apparatuses also includes authentication request transmission means for transmitting, from the second printing apparatus connecting means to the authentication server, the user identification information that has been acquired from the viewing terminal by the user identification information acquisition means, the printing apparatus identification information, and the content identification information. The authentication server includes authentication server connecting means for connecting to the printing apparatuses, and authentication information storage means for storing, separately for each combination of the user and the printing apparatus that is the output destination, authentication information that is associated with a permission condition for permitting printing of the content. The authentication server also includes authentication determination means for determining, in a case where the user identification information, the content identification information, and the printing apparatus identification information have been received from the printing apparatus by the authentication server connecting means, whether to permit printing of the content that is identified by the content identification information for the combination of the user who is identified by the user identification information and the printing apparatus that is identified by the printing apparatus identification information, the determination being based on the authentication information that is stored in the authentication information storage means. The authentication server also includes print command information transmission means for transmitting, from the authentication server connecting means to the printing apparatus that is identified by the printing apparatus identification information, in a case where it has been determined by the authentication determination means that printing will be permitted, print command information that commands the printing apparatus to print. Each of the printing apparatuses further includes printing control means for causing printing to be performed by the printing means in a case where the print command information has been received from the second printing apparatus connecting means.

Further, according to the present disclosure, the viewing terminal is provided with the display screen that displays the content, the viewing terminal being connectable to the printing apparatuses, each of which is provided with printing means for performing printing, and the printing apparatuses being connected through the network to the authentication server that performs the authentication for printing. The viewing terminal includes the display data storage means for storing the display data for displaying the content on the display screen, the user identification information acquisition means for acquiring the user identification information that identifies the user, the printing apparatus identification information acquisition means for acquiring the printing apparatus identification information that identifies the printing apparatus that is the output destination where printing of the content will be performed, the print command means for issuing the command to print the content for which the display data is stored in the display data storage means, and the viewing terminal connecting means for connecting to the printing apparatus. The viewing terminal also includes the print request transmission means for transmitting from the viewing terminal connecting means to the printing apparatuses, in a case where the command to print has been issued by the print command means, the content identification information that identifies the content for which the command to print has been issued and the printing apparatus identification information that has been acquired by the printing apparatus identification information acquisition means.

In addition, according to the present disclosure, a viewing program causes a computer to function as each type of processing means of the viewing terminal.

Furthermore, according to the present disclosure, each of the printing apparatuses is provided with the printing means for performing printing, is connected to the viewing terminal that is provided with the display screen that displays the content, and is connected through the network to the authentication server that performs the authentication for printing. Each of the printing apparatus includes the first printing apparatus connecting means for connecting to the viewing terminal, the second printing apparatus connecting means for connecting to the authentication server, and the user identification information acquisition means for acquiring from the viewing terminal the user identification information that identifies the user. Each of the printing apparatus also includes the authentication request transmission means for transmitting, from the second printing apparatus connecting means to the authentication server, the content identification information that identifies the content for which the print command has been issued and the printing apparatus identification information that identifies the printing apparatus that will perform printing, both the content identification information and the printing apparatus identification information having been transmitted from the viewing terminal, as well as the user identification information that has been acquired from the viewing terminal by the user identification information acquisition means. Each of the printing apparatus also includes the printing control means for causing printing to be performed by the printing means in a case where print command information that commands the printing apparatus to print has been received from the second printing apparatus connecting means.

In addition, according to the present disclosure, a printing program causes a computer to function as at least the authentication request transmission means and the printing control means.

Further, according to the present disclosure, the authentication server performs the authentication for printing and is connected through a network to each of the printing apparatuses that is provided with the printing means for performing printing, the printing apparatuses being connected to the viewing terminal that is provided with the display screen that displays the content. The authentication server includes the authentication server connecting means for connecting to the printing apparatus, and the authentication information storage means for storing, separately for each combination of the user and the printing apparatus that is an output destination, the authentication information that is associated with the permission condition for permitting printing of the content.
The authentication server also includes the authentication determination means for determining, in a case where the user identification information that identifies the user, the content identification information that identifies the content that has been designated for printing, and the printing apparatus identification information that identifies the printing apparatus that will perform printing, all of which have been transmitted from one of the printing apparatuses, have been received by the authentication server connecting means, whether to permit printing of the content that is identified by the content identification information for the combination of the user who is identified by the user identification information and the printing apparatus that is identified by the printing apparatus identification information, the determination being based on the authentication information that is stored in the authentication information storage means. The authentication server also includes the print command information transmission means for transmitting, from the authentication server connecting means to the printing apparatus that is identified by the printing apparatus identification information, in a case where it has been determined by the authentication determination means that printing will be permitted, the print command information that commands the printing apparatus to print.

In addition, according to the present disclosure, an authentication program causes a computer to function as each type of processing means of the authentication server.

### Brief Description of the Drawings

FIG. 1 is a system configuration diagram that shows relationships among various devices that configure a printing control system.
FIG. 2 is a schematic figure that shows an electrical configuration of a viewing terminal 1.
FIG. 3 is a schematic figure that shows a configuration of a RAM 12.
FIG. 4 is a schematic figure that shows a configuration of an EEPROM 13.
FIG. 5 is a schematic figure that shows a configuration of a content information storage area 191.
FIG. 6 is a schematic figure that shows an electrical configuration of a MFP 2.
FIG. 7 is a schematic figure that shows a configuration of a RAM 22 of the MFP 2.
FIG. 8 is a schematic figure that shows an electrical configuration of an authentication server 3.
FIG. 9 is a schematic figure that shows a configuration of a hard disk device 33.
FIG. 10 is a schematic figure that shows a configuration of an authentication table storage area 331.
FIG. 11 is a schematic figure that shows a configuration of a content management table storage area 332.
FIG. 12 is a schematic figure that shows a configuration of a RAM 32.
FIG. 13 is a figure that shows a content list screen 100 on which a list of content is displayed.
FIG. 14 is a figure that shows a viewing screen 110 when content is being viewed.
FIG. 15 is a figure that shows a printing destination selection screen 120 that selects the MFP 2 that will print.
FIG. 16 is a figure that shows a content printing result 200.
FIG. 17 is a figure that shows a list reply 301 that replies with a list of the most recent content in response to a request from the viewing terminal 1.
FIG. 18 is a figure that shows a viewing reply 302 that replies with information that includes text of content in response to a request from the viewing terminal 1 to view content.
FIG. 19 is a figure that shows a printing reply 303 that is transmitted to the MFP 2 in response to a request from the viewing terminal 1 to print content.
FIG. 20 is a flowchart of viewing terminal main processing that is performed by the viewing terminal 1.
FIG. 21 is a flowchart of MFP connection confirmation processing that is performed during the viewing terminal main processing.
FIG. 22 is a flowchart of viewing request processing that is performed during the viewing terminal main processing.
FIG. 23 is a flowchart of printing request processing that is performed during the viewing terminal main processing.
FIG. 24 is a flowchart of remote printing request processing that is performed during the viewing terminal main processing.
FIG. 25 is a flowchart of MFP main processing that is performed by the MFP 2.
FIG. 26 is a flowchart of printing request processing that is performed during the MFP main processing.
FIG. 27 is a flowchart of other processing that is performed during the MFP main processing.
FIG. 28 is a flowchart of MFP main processing that is performed by the authentication server. 3.
FIG. 29 is a flowchart of list transmission processing that is performed during the MFP main processing.
FIG. 30 is a flowchart of details transmission processing that is performed during the MFP main processing.
FIG. 31 is a flowchart of printing transmission processing that is performed during the MFP main processing.
FIG. 32 is a flowchart of remote printing transmission processing that is performed during the MFP main processing.
FIG. 33 is a schematic figure that shows an authentication table storage area 3310 that contains a modified example of an authentication table.
FIG. 34 is a system configuration diagram that shows relationships among various devices that configure a printing control system in a modified example.
FIG. 35 is a system configuration diagram that shows relationships among various devices that configure a printing control system in a modified example.

### Best Mode for Carrying Out the Invention

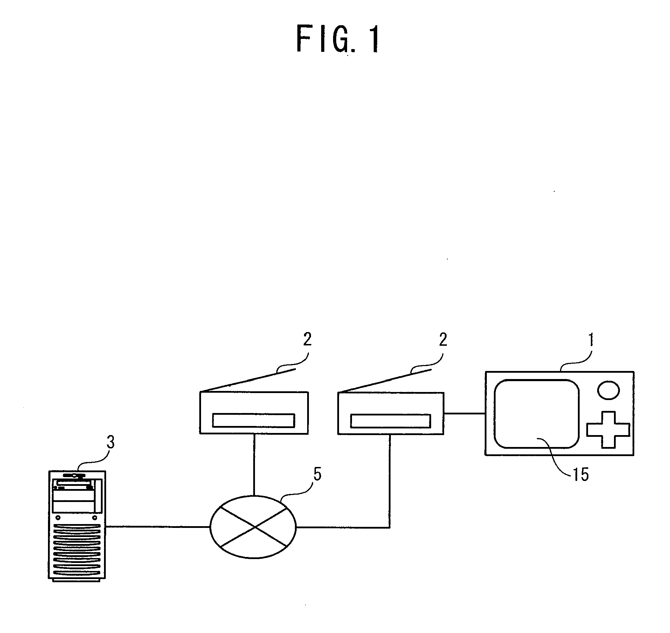

Hereinafter, an embodiment of the present disclosure will be explained with reference to the drawings. First, on overview of a printing control system of the present disclosure will be explained with reference to FIG. 1. As shown in FIG. 1, a plenty of MFP (Multi Function Printer) 2 are also capable of connecting to the Internet 5, and an authentication server 3 is capable of connecting to the Internet 5. In addition, the MFPs 2 and the authentication server 3 are connected to one another over the Internet 5. A viewing terminal 1 is a mobile type of terminal that is provided with a display portion 15, and it displays content that includes characters and images in the display portion 15. Each of the MFPs 2 is provided with a function as a printing apparatus that performs printing and a function as a communication apparatus that is connected to the Internet 5. The viewing terminal 1 is capable of connecting to the MFPs 2. The authentication server 3 performs control of printing of content.

In the printing control system of the present disclosure, in a case where a user wants to print the content that is viewed on the viewing terminal 1, it is necessary to receive approval for the printing from the authentication server 3. The MFP 2 that performs the printing may be not only the MFP 2 to which the viewing terminal 1 is connected, but may also be a MFP 2 that is connected to the Internet 5. For example, when at home, the user can connect the viewing terminal 1 to a MFP 2 at home and can issue a command to print to a MFP 2 at the office. The authentication server 3 can control the approval of the printing of content for a combination (hereinafter called a "terminal combination") of a viewing terminal ID that identifies the viewing terminal 1 and a MFP ID that identifies the MFP 2.

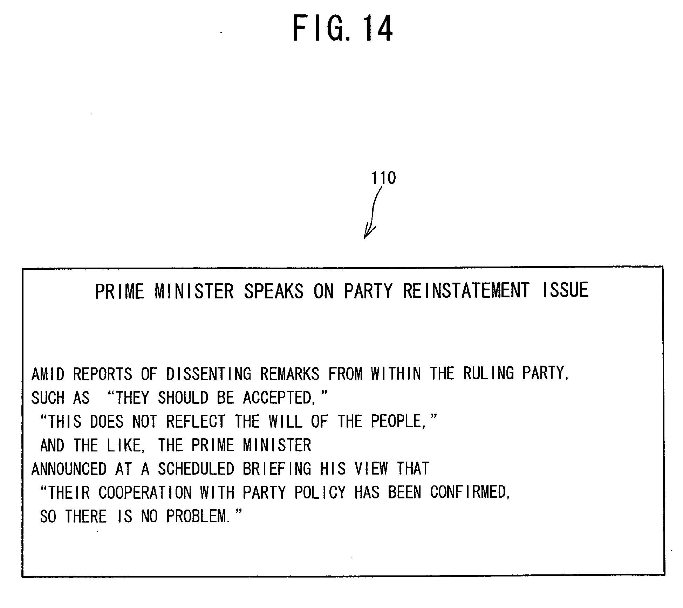

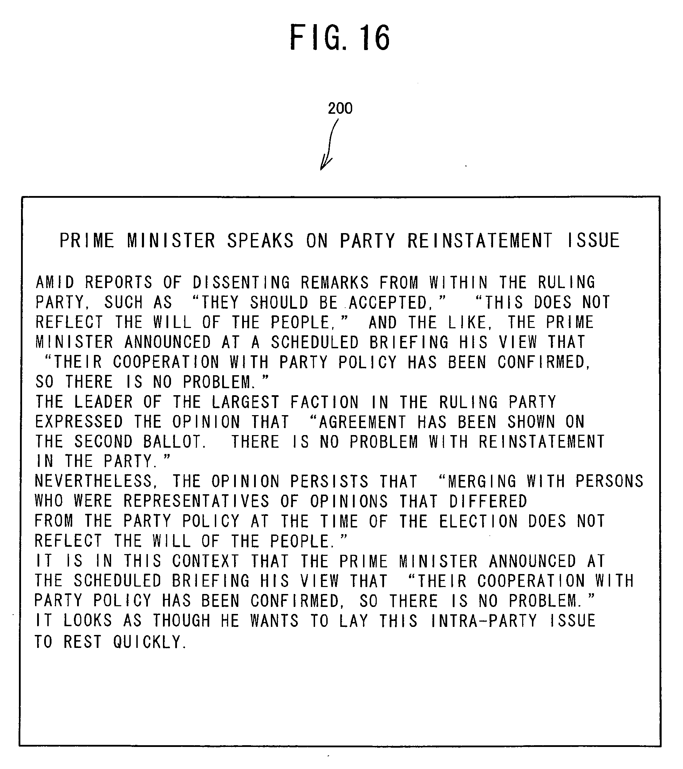

In the present embodiment, a type is assigned to each item of the content. The type serves to classify the nature of the content, such as politics, sports, economy, region, culture, and the like, for example. The types for which printing is permitted are set for each terminal combination, and printing is permitted only in a case where a printing request is made for content of a type for which printing is permitted. Further, in the present embodiment, while only a portion of the information in the content is displayed in the viewing terminal 1 (refer to FIG. 14), all of the information in the content is output in a printing result that is printed by the MFP 2 (refer to FIG. 16). Accordingly, in the present embodiment, only in a case where printing is permitted is the entire text of the content transmitted to the MFP 2 that is a printing destination.

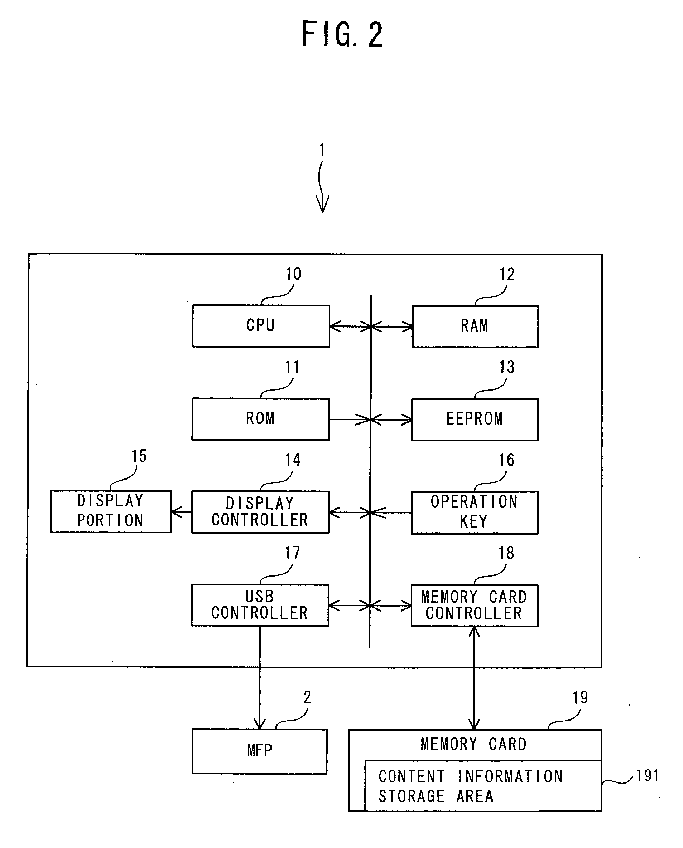

Next, the viewing terminal 1 will be explained with reference to FIGS. 2 to 4. The viewing terminal 1 displays in the display portion 15 content that is stored in a memory card 19. The viewing terminal 1 can also issue a command to print the content that is stored in the memory card 19.

As shown in FIG. 2, a CPU 10 that performs control of the viewing terminal 1 is provided in the viewing terminal 1. A ROM 11, a RAM 12, an EEPROM 13, a display controller 14 that performs control of the display portion 15, an operation key 16, a USB controller 17, and a memory card controller 18 are connected to the CPU 10 through a bus. The ROM 11 stores a viewing program and the like for operating the viewing terminal 1. The RAM 12 temporarily stores various types of data. The EEPROM 13 stores a user ID or the like that is a code for identifying the user who is using the viewing terminal 1. The display controller 14 performs control of the display portion 15. The operation key 16 accepts an input from the user. The USB controller 17 is a controller for connecting with another apparatus, and the memory card controller 18 is a controller for connecting the memory card 19. In the memory card 19, a content information storage area 191 is provided that stores data for displaying content.

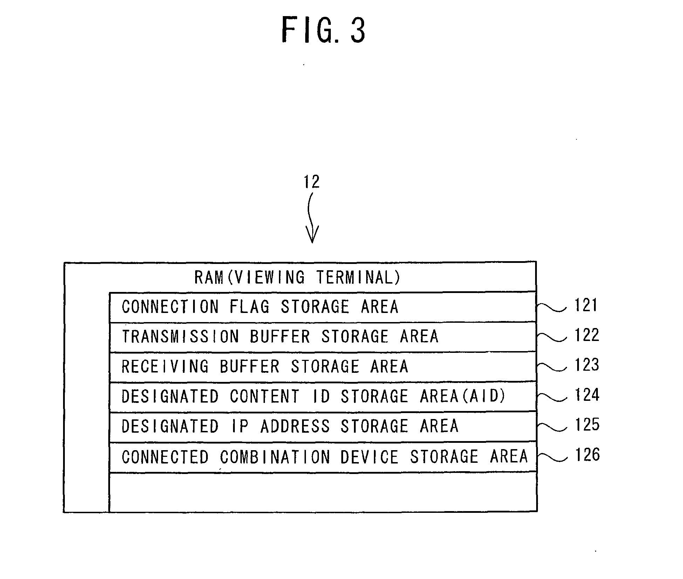

As shown in FIG. 3, a connection flag storage area 121, a transmission buffer storage area 122, a receiving buffer storage area 123, a designated content ID storage area 124, a designated IP address storage area 125, a connected MFP storage area 126, and the like are provided in the RAM 12. Note that various types of storage areas that are not shown in the drawings are also provided in the RAM 12. The connection flag storage area 121 stores a connection flag that indicates whether or not the viewing terminal 1 is connected to the MFP 2. In a case where the viewing terminal 1 is connected to the MFP 2, a "1" is stored in the connection flag to indicate an ON status, and in a case where the viewing terminal 1 is not connected to the MFP 2, a "0" is stored to indicate an OFF status. The transmission buffer storage area 122 stores data that will be transmitted to the MFP 2, and the receiving buffer storage area 123 stores data that has been transmitted from the MFP 2. The designated content ID storage area 124 stores a content ID (an AID) that identifies the content for which a command to view or a command to print has been issued, and the designated IP address storage area 125 stores an IP address (a designated IP address) of the MFP 2 that has been designated to perform printing. The connected MFP storage area 126 stores the IP address for the connected MFP 2.

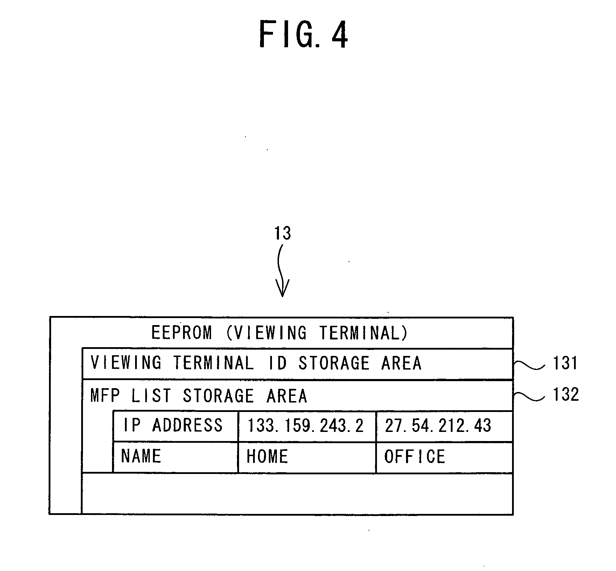

As shown in FIG. 4, a viewing terminal ID storage area 131 and a MFP list storage area 132 are provided in the EEPROM 13. Note that various types of storage areas that are not shown in the drawings are also provided in the EEPROM 13. The viewing terminal ID storage area 131 stores the viewing terminal ID that is information for identifying the viewing terminal 1. The MFP list storage area 132 is connected to the Internet 5 and stores information that pertains to the MFPs 2 that can perform printing. Specifically, the information is the IP addresses of the MFPs 2 on the Internet 5 and titles for identifying the MFPs 2. In the example that is shown in FIG. 4, the name "Home" is assigned to the MFP 2 that has the IP address 133.159.243.2, and the name "Office" is assigned to the MFP 2 that has the IP address 27.54.212.43.

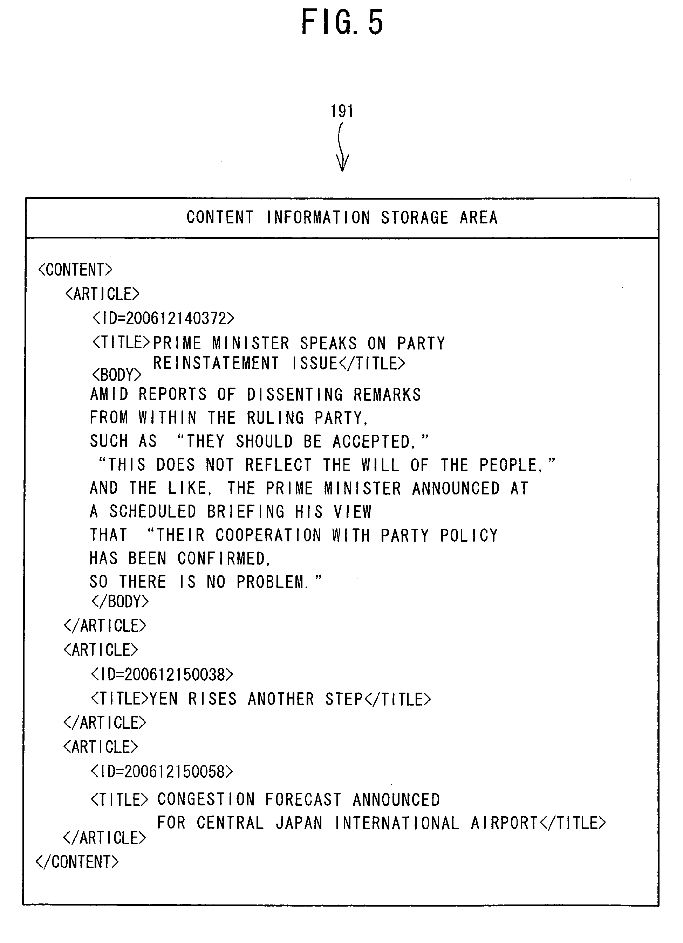

Next, the content information storage area 191 of the memory card 19 will be explained with reference to FIG. 5. As shown in FIG. 5, text in which tags are embedded is stored in the content information storage area 191. The content information is indicated by being placed between a 〈CONTENT〉 tag and a 〈/CONTENT〉 tag. A plurality of articles of content are placed between the 〈CONTENT〉 tag and the 〈/CONTENT〉 tag, and information that pertains to an individual article of content is placed between an 〈ARTICLE〉 tag and an 〈/ARTICLE〉 tag. Information that pertains to an individual article of content that is located between an 〈ARTICLE〉 tag and an 〈/ARTICLE〉 tag includes an 〈ID〉 tag that indicates the content ID that identifies the content, a 〈TITLE〉 tag and a 〈/TITLE〉 tag that indicate the title of the content, and a 〈BODY〉 tag and a 〈/BODY〉 tag that indicate the text of the content.

In the 〈ID〉 tag, as indicated by "〈ID=200612140372〉" in the third line of the content information that is shown in FIG. 5, the "ID" is followed by "=", which in turn is followed by 200612140372. The title of the content is positioned between the 〈TITLE〉 tag and the 〈/TITLE〉 tag, and the text of the content is positioned between the 〈BODY〉 tag and the 〈/BODY〉 tag.

The example that is shown in FIG. 5 contains information that pertains to three articles of content. For the first article of content, the content ID is 200612140372, the title is "Prime Minister Speaks on Party Reinstatement Issue", and the text is "Amid reports of ... (omitted) ... there is no problem." For the next article of content, the content ID is 200612150038, the title is "Yen Rises Another Step", and there is no text. For the next article of content, the content ID is 200612150058, the title is "Congestion Forecast Announced for Central Japan International Airport", and there is no text.

Note that in the present embodiment, when the viewing terminal 1 is connected to the MFP 2, the MFP 2 commutes to the authentication server 3, and the content IDs and the titles for the twenty most recent articles of content are transmitted as a list. When a command is issued to view an article of content, the text of the content is acquired from the authentication server 3 through the MFP 2. Therefore, only the text (the 〈BODY〉 tag) for the content that is being viewed is present in the viewing terminal 1, and the text for the content that is not being viewed is not present in the viewing terminal 1.

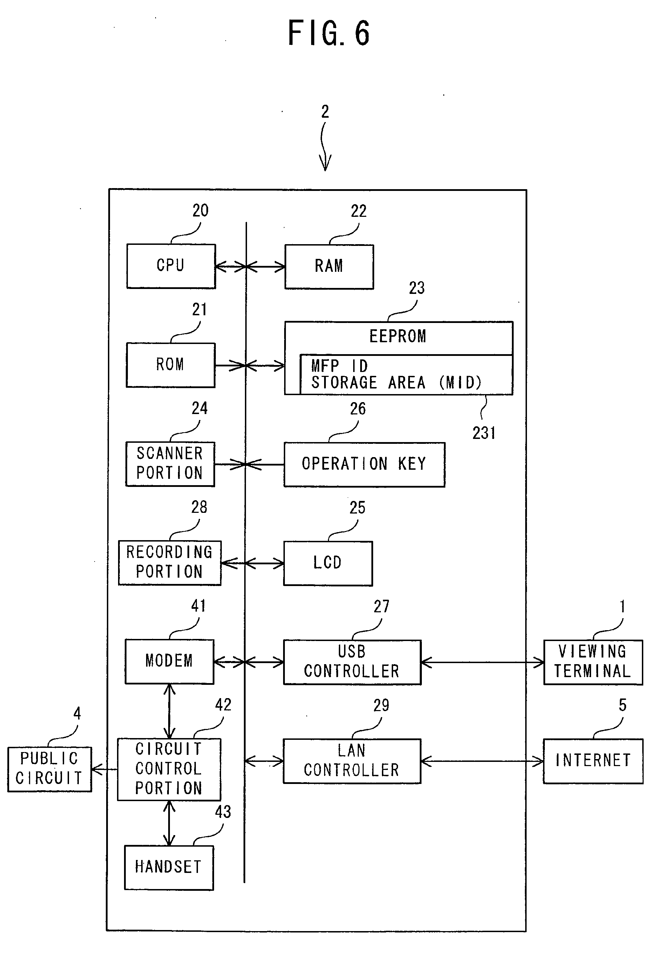

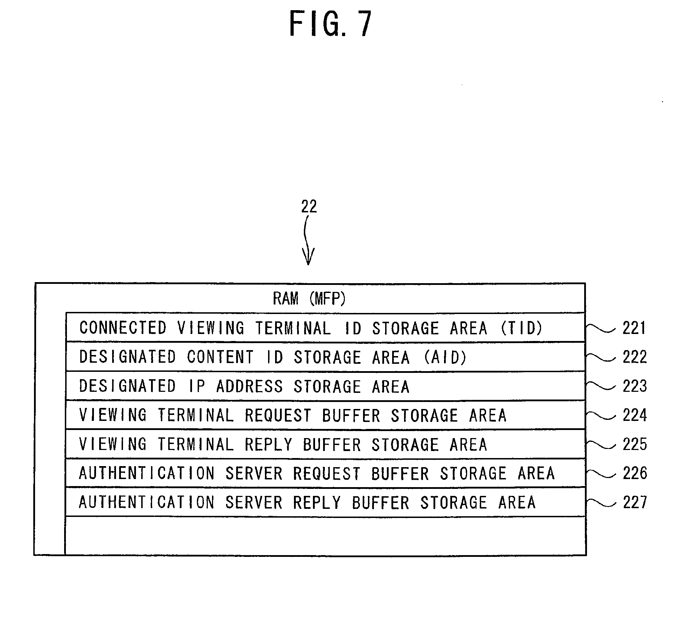

Next, the MFP 2 will be explained with reference to FIGS. 6 and 7. The MFP 2 is an apparatus that is provided with functions of a printing apparatus, a communication apparatus, a telephone, a facsimile machine, a scanner, and a copier. In the present disclosure, the function as the printing apparatus that performs printing, the function as the communication apparatus, and a function that connects to the viewing terminal 1 are the minimum required functions. A CPU 20 that performs control of the MFP 2 is provided in the MFP 2. A ROM 21, a RAM 22, an EEPROM 23, a liquid crystal display (LCD) 25 that is a display screen, an operation key 26, and a USB controller 27 that connects with another apparatus are connected to the CPU 20 through a bus. The ROM 21 stores a printing program, a communication program, and the like for operating the MFP 2. The RAM 22 temporarily stores various types of data. The EEPROM 23 stores the MFP ID for identifying the MFP 2, as well as other information. The operation key 26 accepts an input from the user. The USB controller 27 is a controller for connecting to another apparatus. In this case, the viewing terminal 1 is connected to the MFP 2 through the USB controller 27. A MFP ID storage area 231 that stores the MFP ID (MID) is provided in the EEPROM 23.

In order for the MFP 2 to function as the communication apparatus, it is also provided with a LAN controller 29 for connecting to the Internet 5, and the LAN controller 29 is connected to the CPU 20. Further, in order for the MFP 2 to function as the printing apparatus, it is provided with a recording portion 28 that performs printing and is connected to the CPU 20. In the present embodiment, the MFP 2 is an apparatus that performs ink jet printing. Accordingly, a head drive portion for driving a piezoelectric actuator that is provided in each channel of an ink jet head, a roller drive portion for driving a feed roller for feeding printing paper, and the like are provided in the recording portion 28.

A scanner portion 24 and a modem 41 are also provided in the MFP 2 and are connected to the CPU 20. Note that a circuit control portion 42 for connecting to a public circuit 4 is connected to the modem 41, and a handset 43 that inputs and outputs voice is connected to the circuit control portion 42.

Next, various storage areas that are provided in the RAM 22 will be explained with reference to FIG. 7. A connected viewing terminal ID storage area 221, a designated content ID storage area 222, a designated IP address storage area 223, a viewing terminal request buffer storage area 224, a viewing terminal reply buffer storage area 225, an authentication server request buffer storage area 226, an authentication server reply buffer storage area 227, and the like are provided in the RAM 22 of the MFP 2. Note that various types of storage areas that are not shown in the drawings are also provided in the RAM 22. The connected viewing terminal ID storage area 221 stores the viewing terminal ID (TID) of the viewing terminal 1 that is connected to the MFP 2. The designated content ID storage area 222 stores the content ID (the AID) of the content for which a request to view or to print has been issued from the viewing terminal 1. The designated IP address storage area 223 stores the IP address (the designated IP address) of the MFP 2 that has been designated as the printing destination. The viewing terminal request buffer storage area 224 stores data that has been received when data has been transmitted from the viewing terminal 1. The viewing terminal reply buffer storage area 225 stores data that will be transmitted to the viewing terminal 1. The authentication server request buffer storage area 226 stores data that will be transmitted to the authentication server 3, and the authentication server reply buffer storage area 227 stores data that has been received when data has been transmitted from the authentication server 3.

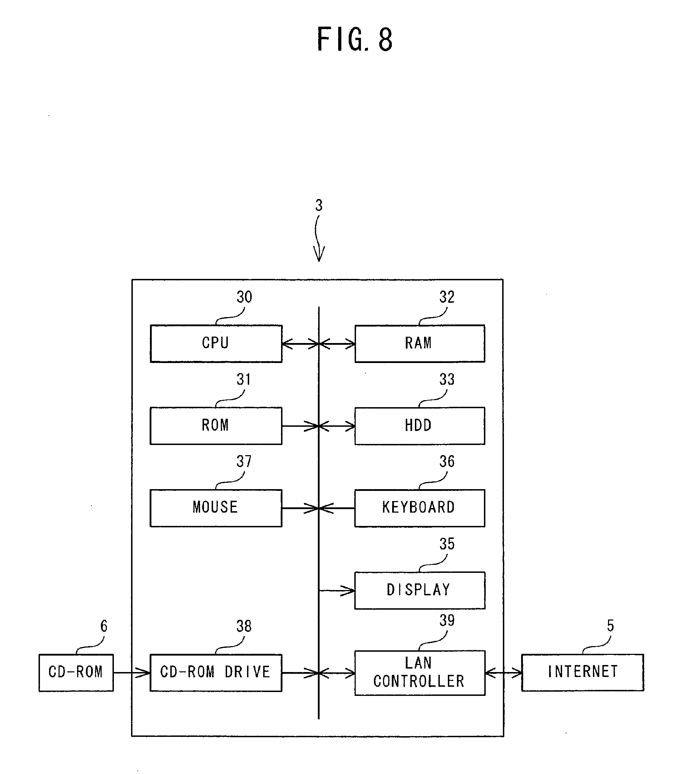

Next, the authentication server 3 will be explained with reference to FIGS. 8 to 12.

As shown in FIG. 8, a CPU 30 that performs control of the authentication server 3 is provided in the authentication server 3, and a ROM 31 that stores an operating system and the like, a RAM 32 that temporarily stores various types of data, a hard disk device (HDD) 33 that stores various types of information, a keyboard 36 that accepts an input from the user, a mouse 37, a display 35 that outputs an image, a CD-ROM drive 38 for reading a CD-ROM 6, and a LAN controller 39 for connecting to the Internet 5 are connected to the CPU 30 through a bus.

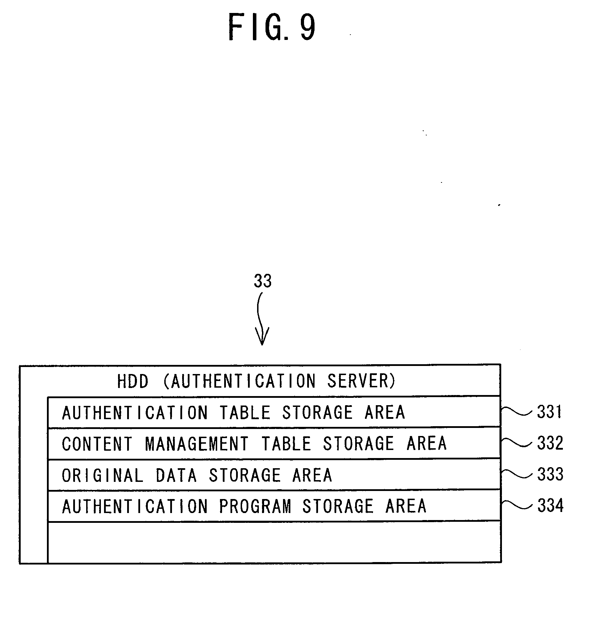

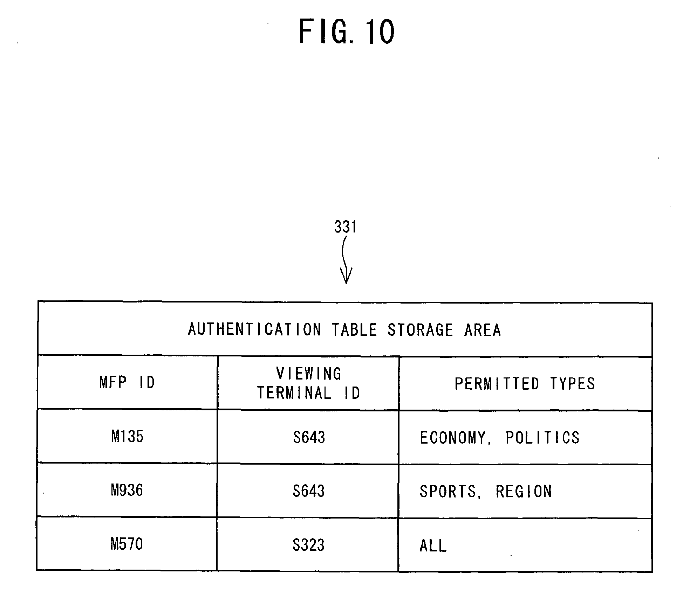

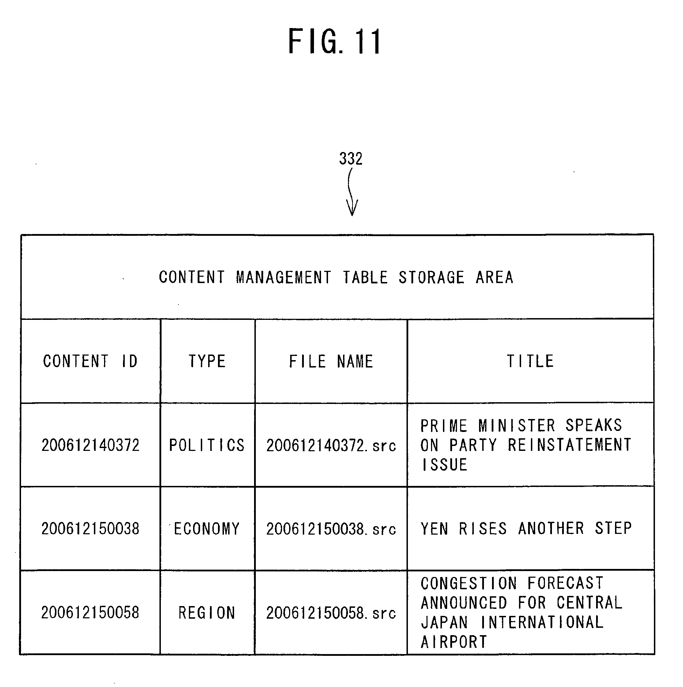

As shown in FIG. 9, an authentication table storage area 331 (refer to FIG. 10), a content management table storage area 332 (refer to FIG. 11), a content file storage area 333, a program storage area 334, and the like are provided in the HDD 33. Note that various types of storage areas that are not shown in the drawings are also provided in the HDD 33. The authentication table storage area 331 stores, in relation to the terminal combinations (the viewing terminal IDs and the MFP IDs), information that indicates the types of content for which printing is permitted (refer to FIG. 10). The content management table storage area 332 stores a file name and a title for each article of content, the file name indicating a file (a content file) in which are stored the content ID, the type, and the text of the article of content (refer to FIG. 11). The content file storage area 333 stores the content file. The program storage area 334 stores an authentication program for operating the authentication server 3.

Next, the authentication table storage area 331 will be explained in detail with reference to FIG. 10. As shown in FIG. 10, a MFP ID field, a viewing terminal ID field, and a permitted types field are provided in the authentication table storage area 331. The content ID is stored in the content ID field, the viewing terminal ID is stored in the viewing terminal ID field, and the information that indicates the types of content for which printing is permitted in relation to the terminal combination (the viewing terminal ID and the MFP ID) is stored in the permitted types field. In the example that is shown in FIG. 10, printing is permitted for the "economy" and "politics" types in relation to the terminal combination of the MFP ID M135 and the viewing terminal ID S643. Printing is permitted for the "sports" and "region" types in relation to the terminal combination of the MFP ID M936 and the viewing terminal ID S643. Printing is permitted for all types in relation to the terminal combination of the MFP ID M570 and the viewing terminal ID S323.

Next, the content management table storage area 332 will be described in detail with reference to FIG. 11. As shown in FIG. 11, a content ID field, a type field, a file name field, and a title field are provided in the content management table storage area 332. The content ID is stored in the content ID field. The type field stores the type as which the content whose content ID is stored in the content ID field is classified. The file name field stores the name of the file in which is stored the text of the content whose content ID is stored in the content ID field. The title field stores the title of the content whose content ID is stored in the content ID field. Note that the information is stored in the content management table storage area 332 such that the newer the content is, the sooner the information will be read (last in, first out).

In the example that is shown in FIG. 11, for the content whose content ID is 200612140372, the type is "politics", the text is stored in a file named 200612140372.src, and the title is "Prime Minister Speaks on Party Reinstatement Issue". For the content whose content ID is 200612150038, the type is "economy", the text is stored in a file named 200612150038.src, and the title is "Yen Rises Another Step". For the content whose content ID is 200612150058, the type is "region", the text is stored in a file named 200612150058.src, and the title is "Congestion Forecast Announced for Central Japan International Airport". In the example that is shown in FIG. 11, the content IDs 200612140372, 200612150038, and 200612150058 are in order according to the date and time that the articles of content were created. The files 200612140372.src, 200612150038.src, and 200612150058.src are stored in the original data storage area 333 of the HDD 33.

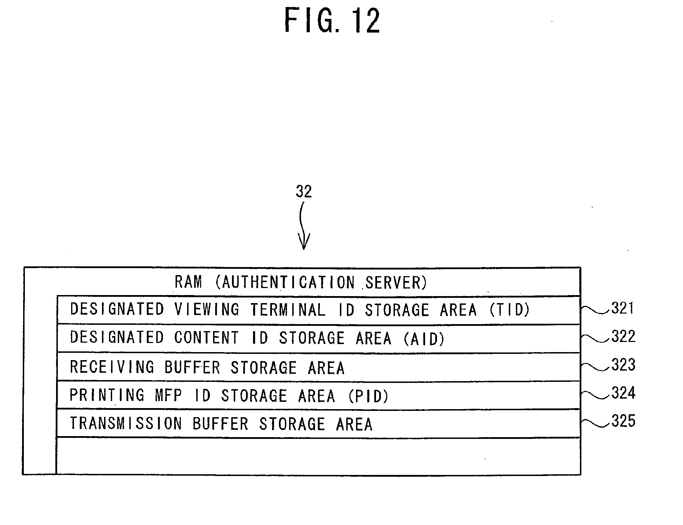

Next, the storage areas that are provided in the RAM 32 of the authentication server 3 will be explained with reference to FIG. 12. As shown in FIG. 12, a designated viewing terminal ID storage area 321, a designated content ID storage area 322, a receiving buffer storage area 323, a printing MFP ID storage area 324, a transmission buffer storage area 325, and the like are provided in the RAM 32. Note that various types of storage areas that are not shown in the drawings are also provided in the RAM 32. The designated viewing terminal ID storage area 321 stores the viewing terminal ID (the TID) of the viewing terminal 1 from which a request for processing such as printing or the like has been made. The designated content ID storage area 322 stores the content ID (the AID) of the content for which the request for processing such as printing or the like has been made. The receiving buffer storage area 323 stores data that has been received from the viewing terminal 1 through the MFP 2, and the transmission buffer storage area 325 stores data that will be transmitted to the viewing terminal 1 through the MFP 2. In a case where the viewing terminal 1 issues a print command (a remote print command) to a MFP 2 other than the MFP 2 to which the viewing terminal 1 is connected, the printing MFP ID storage area 324 stores the MFP ID (a PID) of the MFP 2 to which the print command has been issued.

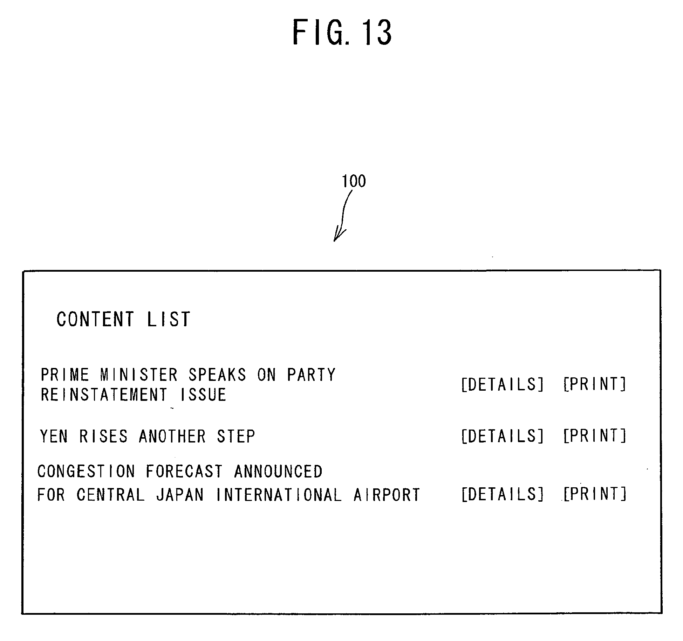

Next, screens of the viewing terminal 1 will be explained with reference to FIGS. 13 to 15.

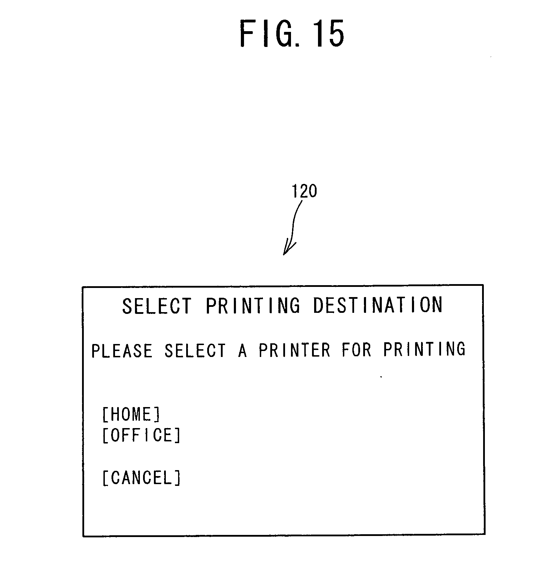

As shown in FIG. 13, a Details button and a Print button are displayed for each content title on a content list screen 100. If the operation key 16 is used to select the Details button, the text of the corresponding content is displayed (refer to FIG. 14). If the Print button is selected, a printing destination selection screen 120 like that shown in FIG. 15 is displayed (refer to FIG. 15), and the corresponding content is printed on the selected MFP 2.

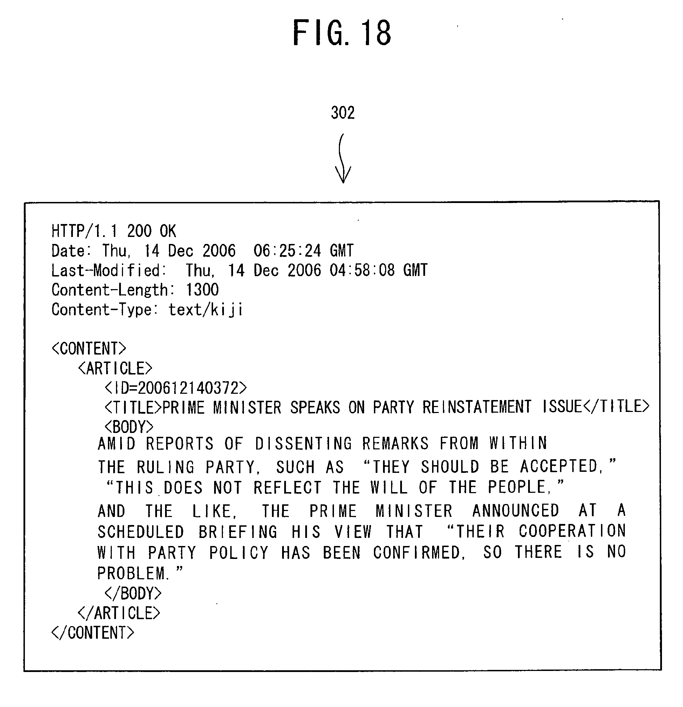

The example that is shown in FIG. 13 is the content list screen 100 that is displayed based on the content information that is stored in the content information storage area 191, as shown in FIG. 5. "Prime Minister Speaks on Party Reinstatement Issue", "Yen Rises Another Step", and "Congestion Forecast Announced for Central Japan International Airport" are displayed as the three content titles. The Details button and the Print button are also displayed for each of the content titles. In this example, the 〈BODY〉 tag exists and the text is stored in the content information storage area 191 for the content ID 200612140372, but no 〈BODY〉 tags exist and no texts are stored for the other two articles of content. Accordingly, in this sort of case, a viewing request is transmitted to the authentication server 3, and the data for the text that is associated with the 〈BODY〉 tag is sent back from the authentication server 3 (refer to FIG. 18).

As shown in FIG. 14, on a viewing screen 110, the title of the content is displayed in the upper part of the screen, and the text is displayed under the title. The example that is shown in FIG. 14 is the viewing screen 110 that is displayed in a case where the Details button has been selected for the content that is displayed in the uppermost position on the content list screen 100, and the title "Prime Minister Speaks on Party Reinstatement Issue" and a portion of the text "Amid reports of ... (omitted) ... there is no problem" are displayed.

As shown in FIG. 15, on the printing destination selection screen 120, the names of the MFPs 2 that can be selected are displayed beneath a message that says, "Please select a printer for printing." The names of the MFPs 2 can be selected by operating the operation key 16. The displayed names of the MFPs 2 are the MFP names that are registered in a MFP list that is stored in the MFP list storage area 132 in the EEPROM 13. A Cancel button is also displayed, and if it is selected, the command to print is canceled.

Next, a content printing result will be explained with reference to FIG. 16. As shown in FIG. 16, in a printing result 200, the title of the content is printed at the top in the center, and the text is printed beneath that. The example that is shown in FIG. 16 is the viewing screen 110 that is displayed in a case where the Print button has been selected for the content that is displayed in the uppermost position on the content list screen 100, and the title "Prime Minister Speaks on Party Reinstatement Issue" and the entire text "Amid reports of ... (omitted) ... to rest quickly" are displayed. In the present embodiment, as shown in FIG. 14, only the beginning portion of the text of the content is displayed on the viewing screen 110 that is displayed in the display portion 15 of the viewing terminal 1, and it is not possible to view the entire text. However, printing makes it possible to view all of the content, as shown in FIG. 16.

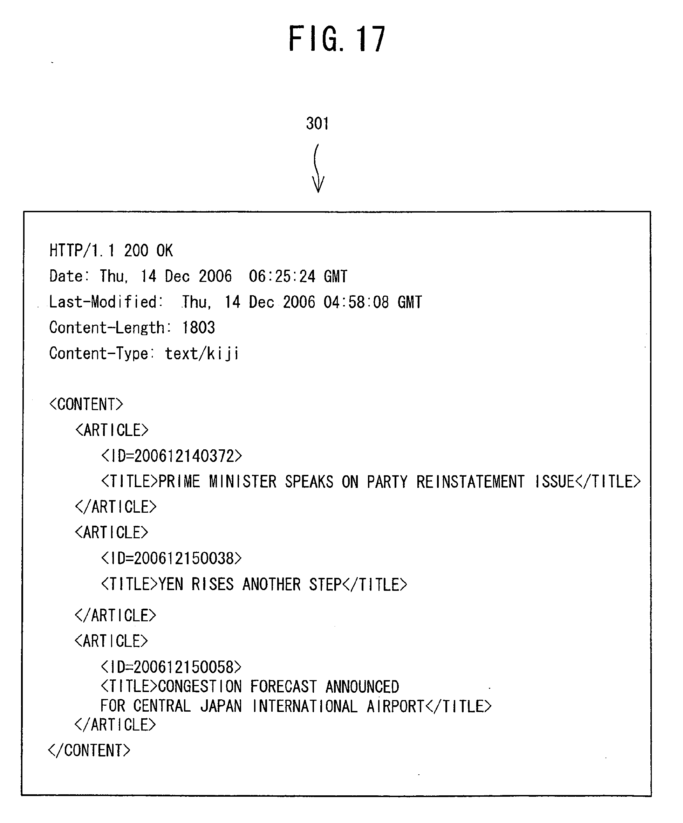

Next, reply information that is transmitted from the authentication server 3 will be explained with reference to FIGS. 17 to 19.

The data that is shown in FIGS. 17 to 19 is data that is based on the Hypertext Transfer Protocol (HTTP). In each case, the first line is a reply code that indicates a processing result for a request. A reply status code at the end of the line is "200 OK" in every case, indicating that the request was successful. Note that in a case where the request has failed, the reply status code becomes something like "401 UNAUTHORIZED (Authentication failure)" that indicates the nature of the failure. The second to the sixth lines are header data and include a reply date and time, a date and time of the last update of the content, a data size, and character code information. A single blank line follows that serves as a separator between the header portion and a data portion, and following the blank line comes the data portion containing the data that the user wants to transmit.

As shown in FIG. 17, a list reply 301 contains information in the data portion that includes the content IDs and the titles of three articles of content. One article of content has the content ID 200612140372 and the title "Prime Minister Speaks on Party Reinstatement Issue", another article of content has the content ID 200612150038 and the title "Yen Rises Another Step", and the last article of content has the content ID 200612150058 and the title "Congestion Forecast Announced for Central Japan International Airport". Note that in the same manner as in the content information storage area 191 that is shown in FIG. 5, the content information is placed between a 〈CONTENT〉 tag and a 〈/CONTENT〉 tag, and the individual articles of content are each placed between an 〈ARTICLE〉 tag and an 〈/ARTICLE〉 tag. For each article of content, the content ID is placed between a 〈CONTENT〉 tag and a 〈/CONTENT〉 tag, and the title is placed between a 〈TITLE〉 tag and a 〈/TITLE〉 tag. Among the information in the data portion, any content information that is not already stored in the content information storage area 191 is added to the content information storage area 191.

As shown in FIG. 18, a viewing reply 302 contains content information in the data portion that includes the content ID, the title, and the text for one article of content. The content ID is 200612140372, the title is "Prime Minister Speaks on Party Reinstatement Issue", and the text is "Amid reports of ... (omitted) ... there is no problem." Note that in the same manner as the data portion in the content information storage area 191 that is shown in FIG. 5 and the list reply 301 that is shown in FIG. 17, the content information is placed between a 〈CONTENT〉 tag and a 〈/CONTENT〉 tag. In addition, the article of content is placed between an 〈ARTICLE〉 tag and an 〈/ARTICLE〉 tag. The content ID for the article of content is placed between a 〈CONTENT〉 tag and a 〈/CONTENT〉 tag, and the title is placed between a 〈TITLE〉 tag and a 〈/TITLE〉 tag. The text that is placed between a 〈BODY〉 tag and a 〈/BODY〉 tag in the data portion is added to the content information storage area 191.

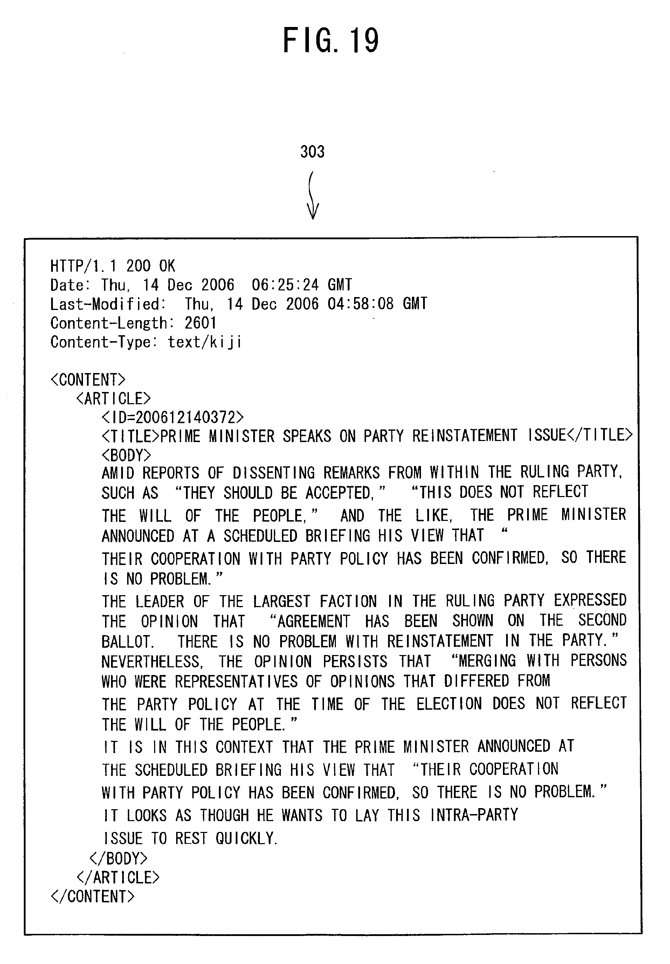

As shown in FIG. 19, a printing reply 303 contains content information in the data portion that includes the content ID, the title, and the text for one article of content. Note that the text in the content information is the text for printing, and it includes not just the portion of the text for viewing that is shown in FIG. 18, but rather the entire text of the content. Note also that in the same manner as the data portion in the content information storage area 191, the list reply 301, and the viewing reply 302, the content information is placed between a 〈CONTENT〉 tag and a 〈/CONTENT〉 tag. In addition, the article of content is placed between an 〈ARTICLE〉 tag and an 〈/ARTICLE〉 tag. The content ID for the article of content is placed between a 〈CONTENT〉 tag and a 〈/CONTENT〉 tag, and the title is placed between a 〈TITLE〉 tag and a 〈/TITLE) tag. Print data for printing the title and the text is created based on the content information.

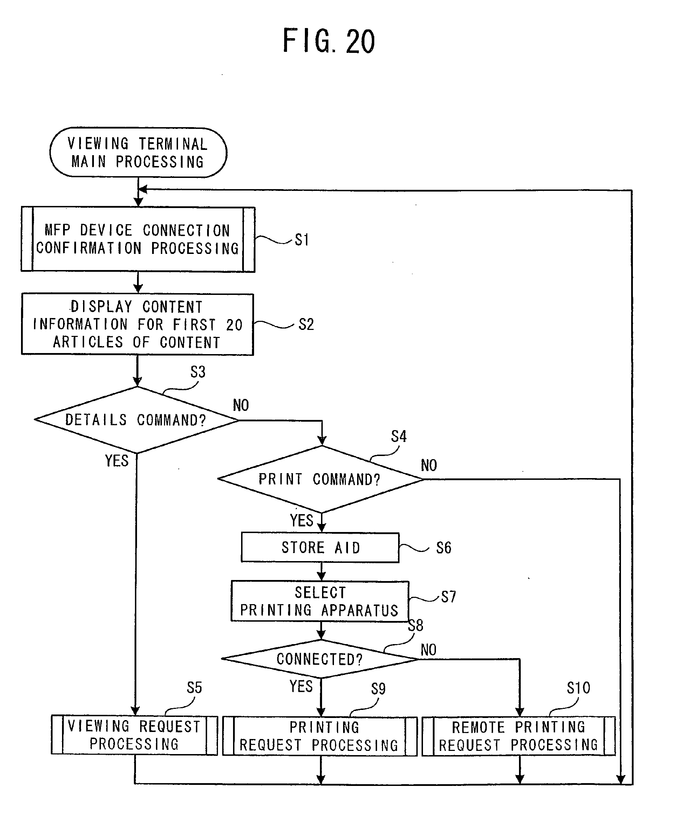

Next, the operations of the various apparatuses in the printing control system of the present disclosure will be explained with reference to flowcharts in FIGS. 20 to 32. First, the operation of the viewing terminal 1 will be explained with reference to the flowcharts in FIGS. 20 to 24.

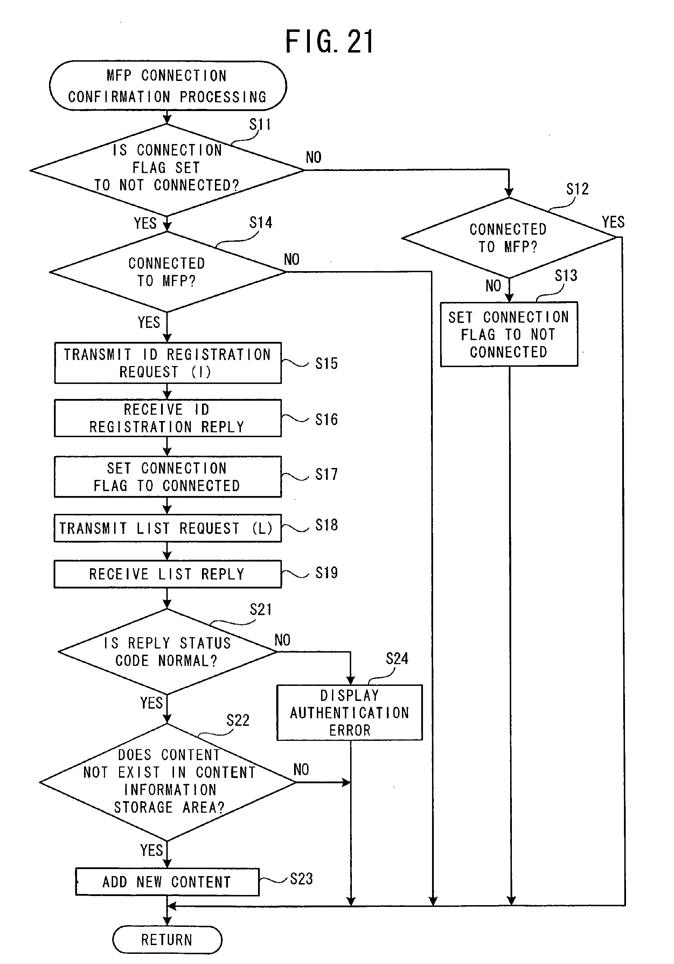

When the electric power to the viewing terminal 1 is turned on, MFP connection confirmation processing is performed (S1; refer to FIG. 21). In the MFP connection confirmation processing, as shown in FIG. 21, first a determination is made as to whether or not the connection flag is OFF, indicating a state of not being connected to the MFP 2 (S11). If the connection flag is ON, indicating that the viewing terminal 1 is not in a state of not being connected (NO at S11), a determination is made as to whether or not the viewing terminal 1 is currently connected to the MFP 2 (S12). A connection query is made to the USB controller 17, and if a reply is received that the viewing terminal 1 is connected (YES at S12), the viewing terminal 1 is connected to the MFP 2, so the MFP connection confirmation processing ends and control returns to the viewing terminal main processing. On the other hand, if the viewing terminal 1 is not currently connected to the MFP 2 (NO at S12), the connection flag is set to OFF, the IP address that is stored in the connected MFP storage area 126 is cleared (S13), the MFP connection confirmation processing ends, and control returns to the viewing terminal main processing.

In a case where the connection flag is OFF at S11, indicating a state of not being connected (YES at S11), a determination is made as to whether or not the viewing terminal 1 is currently connected to the MFP 2 (S 14). If the viewing terminal 1 is not currently connected to the MFP 2 (NO at S14), the MFP connection confirmation processing ends at that point, and control returns to the viewing terminal main processing. If the viewing terminal 1 is currently connected to the MFP 2 (YES at S 14), an ID registration request is created and stored in the transmission buffer storage area 122 of the RAM 12, and the ID registration request is transmitted to the MFP 2 (S15). The ID registration request is a request to the MFP 2 to register the viewing terminal ID of the viewing terminal 1 as the currently connected viewing terminal 1. Accordingly, the ID registration request includes a command (I) that indicates the request to register the viewing terminal ID, as well as the viewing terminal ID that is stored in viewing terminal ID storage area 131 of the EEPROM 13.

Next, receiving processing is performed for an ID registration reply from the MFP 2 (S16). When the ID registration reply is received from the MFP 2, it is stored in the receiving buffer storage area 123 of the RAM 12. Then the connection flag is set to ON, indicating a state of being connected, and the IP address of the MFP 2 that is included in the ID registration reply is stored in the connected MFP storage area 126 (S17). Note that in a case where the ID registration reply has not been received from the MFP 2 even after a specified period of time (for example, thirty seconds) has elapsed, error processing is performed that displays an error message such as "Cannot connect to MFP" or the like, and the MFP connection confirmation processing ends.

When the ID registration in the MFP 2 has been completed, and the viewing terminal 1 is in a state of being connected to the MFP 2 (S 15 to S 17), a list request is created and stored in the transmission buffer storage area 122 of the RAM 12, and the created list request is transmitted to MFP 2 (S18). The list request is a request to the MFP 2 to acquire a list of the most recent content from the authentication server 3. Accordingly, the list request includes a command (L) that indicates the request for the list. Next, receiving processing is performed for a list reply from the MFP 2 (S19). When the list reply is received from the MFP 2, it is stored in the receiving buffer storage area 123 of the RAM 12.

Next, a determination is made as to whether or not a reply status code in the received list reply is normal (S21). As explained in the example of the list reply 301 in FIG. 17, the first line of the list reply is the reply code and indicates the result of the processing of the request. Accordingly, the determination is made as to whether or not the reply status code at the end of the first line is "200 OK", indicating a normal result. If the reply status code is not normal (NO at S21), an authentication error display is displayed in the display portion 15 to indicate that permission was not obtained to acquire the list of the content (S24), and the processing returns to the viewing terminal main processing.

If the reply status code is normal (YES at S21), processing is performed for the received list reply (S22, S23). Specifically, first the content that is included in the list reply is compared to the content that is stored in the content information storage area 191, and a determination is made as to whether or not the content that is included in the list reply is content that is not stored in the content information storage area 191 (S22). If it is that sort of content (YES at S22), that is, if it is new content, information that pertains to the content is stored in the content information storage area 191 (S23). Specifically, the 〈ARTICLE〉 tag is added to the line that follows the 〈CONTENT〉 tag in the content information storage area 191. Then the 〈ID〉 tag for the content is added on the next line, the 〈TITLE〉 tag, the title of the content, and the 〈/TITLE〉 tag are added on the line after that, and the 〈/ARTICLE〉 tag is added on the line after that.

Note that in a case where there is no content included in the list reply that is not stored in the content information storage area 191 (NO at S22), there is no content that should be added to the content information storage area 191, so the MFP connection confirmation processing ends at that point, and control returns to the viewing terminal main processing. Note that in a case where the list reply has not been received from the MFP 2 even after a specified period of time (for example, three minutes) has elapsed, error processing is performed that displays an error message such as "List could not be received" or the like, and the MFP connection confirmation processing ends.

When the MFP connection confirmation processing that is described above has been completed (S1), a list of the content information for the twenty most recent articles of content (refer to FIG. 13) is displayed in the display portion 15 (S2), as shown in FIG. 20. In the example of the content information storage area 191 that is shown in FIG. 5, three articles of content are stored in the content information storage area 191, so the titles of the three articles of content are listed as they are on the content list screen 100 that is shown in FIG. 13. Note that in a case where more than twenty articles of content are stored in the content information storage area 191, the information that is stored in the content information storage area 191 is read in order, starting with the first line, and the first twenty articles of content that are read are used.

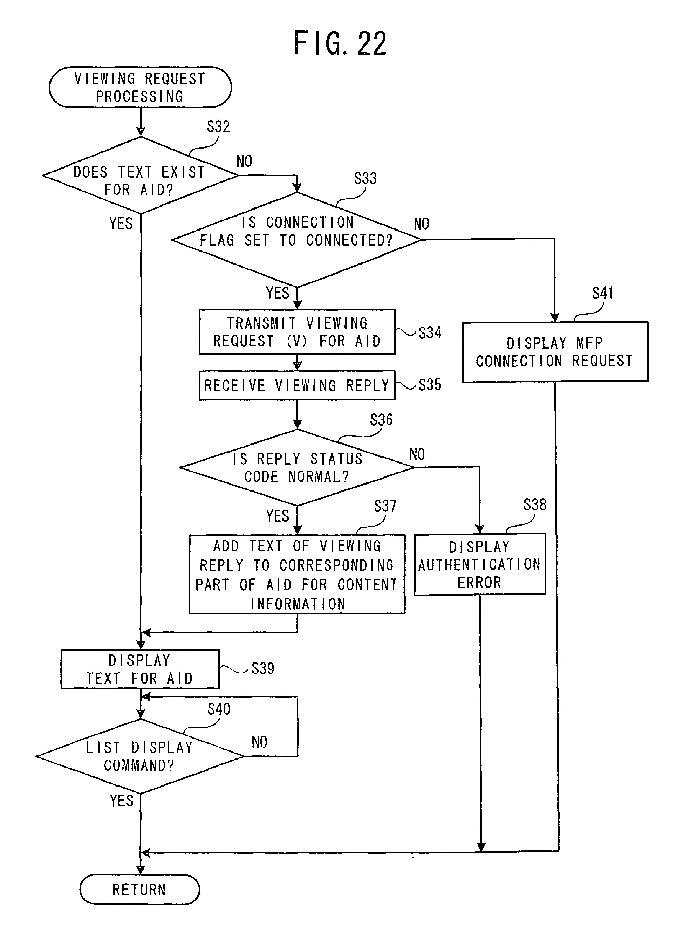

If the user selects one of the Details buttons on the content list screen 100, a determination is made as to whether or not a command to display the details of the content has been issued (S3). If the details command has been issued (YES at S3), viewing request processing is performed (S5; refer to FIG. 22). The viewing request processing will be explained later with reference to the flowchart in FIG. 22. If the details command has not been issued (NO at S23), and if the user selects one of the Print buttons on the content list screen 100, a determination is made as to whether or not the command to print the content has been issued (S4).

If the command to print the content has been issued (YES at S4), the content ID (AID) for the content for which the Print button was selected is stored in the designated content ID storage area 124 of the RAM 12 (S6). Then printing destination selection processing is performed (S7). At this point, the printing destination selection screen 120 (refer to FIG. 15) is displayed. The names that are stored in the MFP list storage area 132 of the EEPROM 13 are displayed on the printing destination selection screen 120. The IP address of the MFP 2 that the user selects and that is the output destination is stored in the designated IP address storage area 125 of the RAM 12.

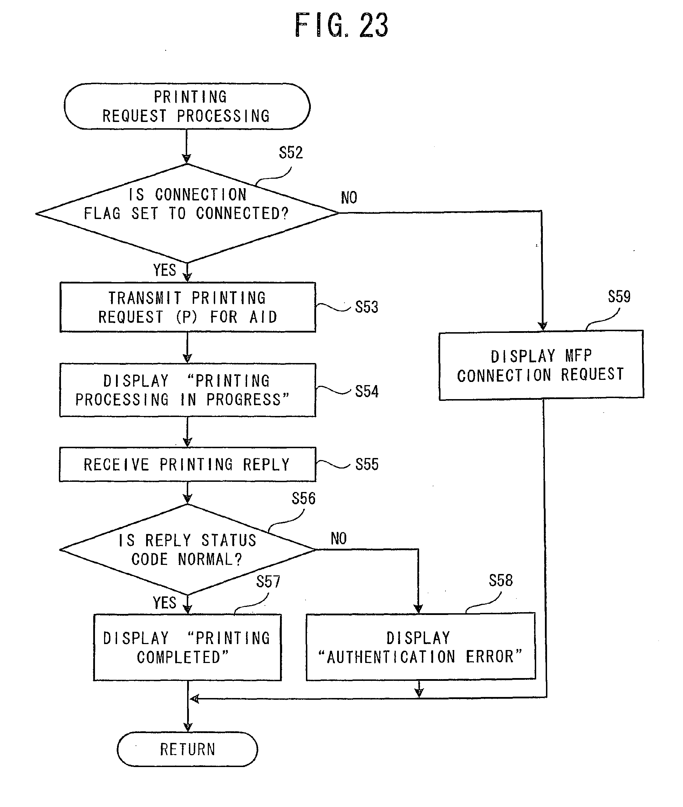

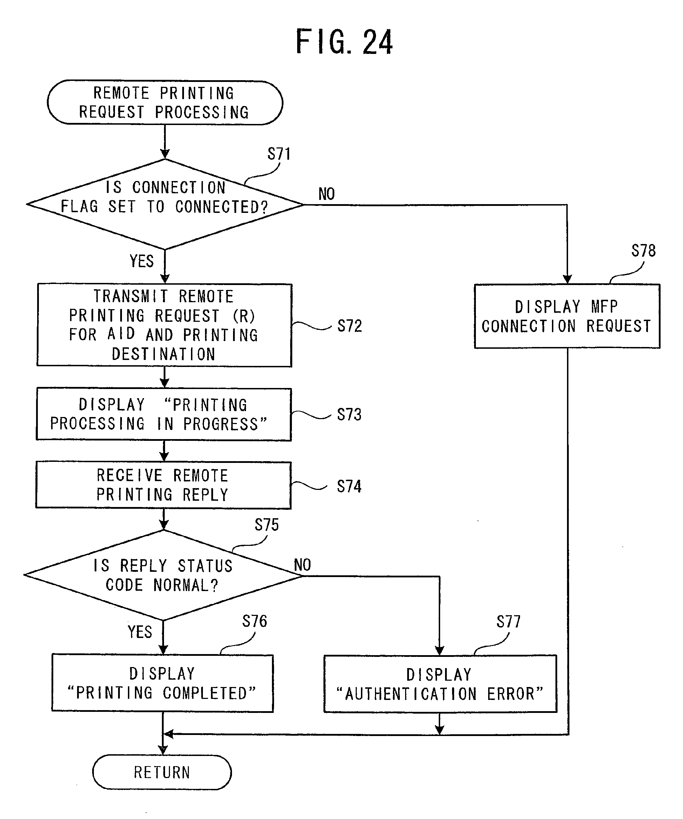

Next, determination is made as to whether or not the printer that has been selected on the printing destination selection screen 120 is currently connected to the MFP 2 (S8). The determination is made by determining whether or not the IP address of the selected printer matches the IP address in the connected MFP storage area 126. If the MFP 2 is currently connected (YES at S8), printing request processing is performed (S9; refer to FIG. 23). If the MFP 2 is not currently connected (NO at S8), remote printing request processing is performed (S10; refer to FIG. 24). Note that the printing request processing (S9) and the remote printing request processing (S10) will be explained later with reference to the flowchart in FIG. 23 and the flowchart in FIG. 24, respectively. The processing then returns to S1, the processing S1 to S4 is performed repeatedly, and if the viewing terminal is connected to or disconnected from the MFP 2, or if the user issues a command, the corresponding processing is performed.

Next, the viewing request processing will be explained with reference to the flowchart in FIG. 22. As explained above, the viewing request processing is performed when the user has selected one of the Details buttons on the content list screen 100 and the command to display the details of the content has been issued (YES at S3).

Accordingly, first, a determination is made as to whether or not the text (the 〈BODY〉 tag) for the content ID that is stored in the designated content ID storage area 124 exists in the content information storage area 191 (S32). If the text exists (YES at S32), the information that is located between the 〈BODY〉 tag and the 〈/BODY〉 tag is displayed in the display portion 15 as the text of the designated content (S39). The processing then waits for the command to display the content list screen 100 to be issued by an operation of the operation key 16 (NO at S40). If the command to display the content list screen 100 is issued (YES at S40), the processing returns to viewing terminal main processing. The processing then proceeds to S2 in the viewing terminal main processing, so the content list screen 100 is displayed.

On the other hand, if the text (the 〈BODY〉 tag) for the content ID that is stored in the designated content ID storage area 124 does not exist in the content information storage area 191 (NO at S32), the text for the content must be acquired from the authentication server 3. Accordingly, a determination is made, by referring to the connection flag storage area 121, as to whether or not the connection flag is ON and the viewing terminal 1 is connected to the MFP 2 (S33). If the viewing terminal 1 is not connected to the MFP 2 (NO at S33), the text of the content cannot be acquired from the authentication server 3, so a message requesting that the viewing terminal 1 be connected to the MFP 2 is displayed in the display portion 15 (S41), the viewing request processing ends, and the processing returns to the viewing terminal main processing.

If the connection flag is ON and the viewing terminal 1 is connected to the MFP 2 (YES at S33), a viewing request is created and stored in the transmission buffer storage area 122, and the created viewing request is transmitted to the MFP 2 (S34). The viewing request is a request to the MFP 2 to acquire the text of the designated content from the authentication server 3. Accordingly, the viewing request includes a command (V) that indicates the request for the text of the content, as well as the content ID (the AID) for the text for which the acquisition is being requested. The AID is the content ID that is stored in the designated content ID storage area 124. Next, receiving processing is performed for a viewing reply from the MFP 2 (S35). When the viewing reply is received from the MFP 2, it is stored in the receiving buffer storage area 123 of the RAM 12.

Next, a determination is made as to whether or not a reply status code in the received viewing reply is normal (S36). As was explained in the example of the viewing reply 302 in FIG. 18, the first line of the list reply is the reply code and indicates the result of the processing of the request. Accordingly, the determination is made as to whether or not the reply status code at the end of the first line is "200 OK", indicating a normal result. If the reply status code is not normal (NO at S36), an authentication error display is displayed in the display portion 15 to indicate that permission was not obtained to acquire the text of the content (S38), and the processing returns to the viewing terminal main processing.

If the reply status code in the received viewing reply is normal (YES at S36), the text that is included in the received viewing reply is added to the content information storage area 191 (S37). Specifically, the information from the 〈BODY〉 tag to the 〈/BODY〉 tag in the viewing reply is added on the line following the 〈TITLE〉 tag for the content ID that is stored in the designated content ID storage area 124. The information from the 〈BODY〉 tag to the 〈/BODY〉 tag is also displayed in the display portion 15 as the text for the designated content (S39). The processing then waits for the command to display the content list screen 100 to be issued by an operation of the operation key 16 (NO at S40). If the command to display the content list screen 100 is issued (YES at S40), the processing returns to viewing terminal main processing. The processing then proceeds to S2 in the viewing terminal main processing, so the content list screen 100 is displayed.

Thus, in a case where a request has been made to display the details (YES at S3), if the text of the designated content exists in the content information storage area 191, the text is displayed (YES at S32; S39). If the text of the designated content does not exist in the content information storage area 191, the text for the content is acquired from the authentication server 3, and the text is displayed (NO at S32; S33 to S37).

Next, the printing request processing will be explained with reference to the flowchart in FIG. 23. As explained above, the printing request processing is performed in a case where one of the Print buttons has been selected on the content list screen 100 (YES at S4) and the currently connected MFP 2 has been designated as the printing destination (S6; YES at S7).

Accordingly, first a determination is made, by referring to the connection flag storage area 121, as to whether or not the connection flag is ON and the viewing terminal 1 is connected to the MFP 2 (S52). If the connection flag is OFF and the viewing terminal 1 is not connected to the MFP 2 (NO at S52), determinations are made as to whether or not the command to print has been issued and the printing destination is the currently connected MFP 2 (YES at S4; YES at S6; S7), and then the connection to the MFP 2 is cut off. Accordingly, a message requesting that the viewing terminal 1 be connected to the MFP 2 is displayed in the display portion 15 (S59), the viewing request processing ends, and the processing returns to the viewing terminal main processing.

On the other hand, if the connection flag is ON and the viewing terminal 1 is connected to the MFP 2 (YES at S52), a printing request is created and stored in the transmission buffer storage area 122, and the created printing request is transmitted to the MFP 2 (S53). The printing request is a request to the MFP 2 to perform printing after permission to print is received from the authentication server 3. Accordingly, the printing request includes a command (P) that indicates a request for permission to print and the request to perform printing, as well as the content ID (the AID) for which printing is being requested. The AID is the content ID that is stored in the designated content ID storage area 124. After the printing request is transmitted, a message that indicates that printing is in progress is displayed in the display portion 15 (S54).

Next, receiving processing is performed for a printing reply from the MFP 2 (S55). When the printing reply is received from the MFP 2, it is stored in the receiving buffer storage area 123 of the RAM 12. Next, a determination is made as to whether or not a reply status code in the received printing reply is normal (S56). In the same manner as in the list reply 301 and the viewing reply 302, the first line of the printing reply is the reply code and indicates the result of the processing of the request. Accordingly, the determination is made as to whether or not the reply status code at the end of the first line is "200 OK", indicating a normal result. If the reply status code is not normal (NO at S56), an authentication error display is displayed in the display portion 15 to indicate that permission was not obtained to print the content (S58), and the processing returns to the viewing terminal main processing. On the other hand, if the reply status code is normal (YES at S56), a message is displayed in the display portion 15 that indicates that printing of the content has been completed (S57), and the processing returns to the viewing terminal main processing.

As explained above, in a case where printing is requested (YES at S4) and the currently connected MFP 2 has been designated as the printing destination (S6; YES at S7), the printing request is transmitted to the MFP 2. In a case where authentication has been given by the authentication server 3 and printing has been performed, the printing reply with the normal reply status code is transmitted from the MFP 2 (S55 to S57).

Next, the remote printing request processing will be explained with reference to the flowchart in FIG. 24. As explained above, the remote printing request processing is performed in a case where one of the Print buttons has been selected on the content list screen 100 (YES at S4) and a MFP 2 that is not currently connected has been designated as the printing destination S6; NO at S7.

Accordingly, first a determination is made, by referring to the connection flag storage area 121, as to whether or not the connection flag is ON and the viewing terminal 1 is connected to the MFP 2 (S71). If the connection flag is OFF and the viewing terminal 1 is not connected to the MFP 2 (NO at S71), it is determined that the viewing terminal 1 is disconnected from the MFP 2. Accordingly, a message requesting that the viewing terminal 1 be connected to the MFP 2 is displayed in the display portion 15 (S78), the viewing request processing ends, and the processing returns to the viewing terminal main processing.

On the other hand, if the connection flag is ON and the viewing terminal 1 is connected to the MFP 2 (YES at S71), a remote printing request is created and stored in the transmission buffer storage area 122, and the created remote printing request is transmitted to the MFP 2 (S72). The remote printing request is a request to the MFP 2 to perform printing on a MFP 2 with an IP address that has been designated (a designated IP address), after permission to print is received from the authentication server 3. Accordingly, the remote printing request includes a command (R) that indicates a request for permission to print and the request to perform printing on the designated MFP 2, as well as the content ID (the AID) for which printing is being requested and the IP address for printing. The AID is the content ID that is stored in the designated content ID storage area 124, and the designated IP address is the IP address that is stored in the designated IP address storage area 125. After the remote printing request is transmitted, a message that indicates that printing is in progress is displayed in the display portion 15 (S73).

Next, receiving processing is performed for a remote printing reply from the MFP 2 (S74). When the remote printing reply is received from the MFP 2, it is stored in the receiving buffer storage area 123 of the RAM 12. Next, a determination is made as to whether or not a reply status code in the received remote printing reply is normal (S75). In the same manner as in the list reply 301 and the viewing reply 302, the first line of the remote printing reply is the reply code and indicates the result of the processing of the request. Accordingly, the determination is made as to whether or not the reply status code at the end of the first line is "200 OK", indicating a normal result. If the reply status code is not normal (NO at S75), an authentication error display is displayed in the display portion 15 to indicate that permission was not obtained to print the content (S77), and the processing returns to the viewing terminal main processing. On the other hand, if the reply status code is normal (YES at S75), a message is displayed in the display portion 15 that indicates that printing of the content has been completed (S76), and the processing returns to the viewing terminal main processing.

As explained above, in a case where printing is requested (YES at S4) and a MFP 2 that is not currently connected has been designated as the printing destination S6; NO at S7, the remote printing request is transmitted to the MFP 2 (S72). In a case where authentication has been given by the authentication server 3 and printing has been performed, the remote printing reply with the normal reply status code is transmitted from the MFP 2 (S74 to S76).

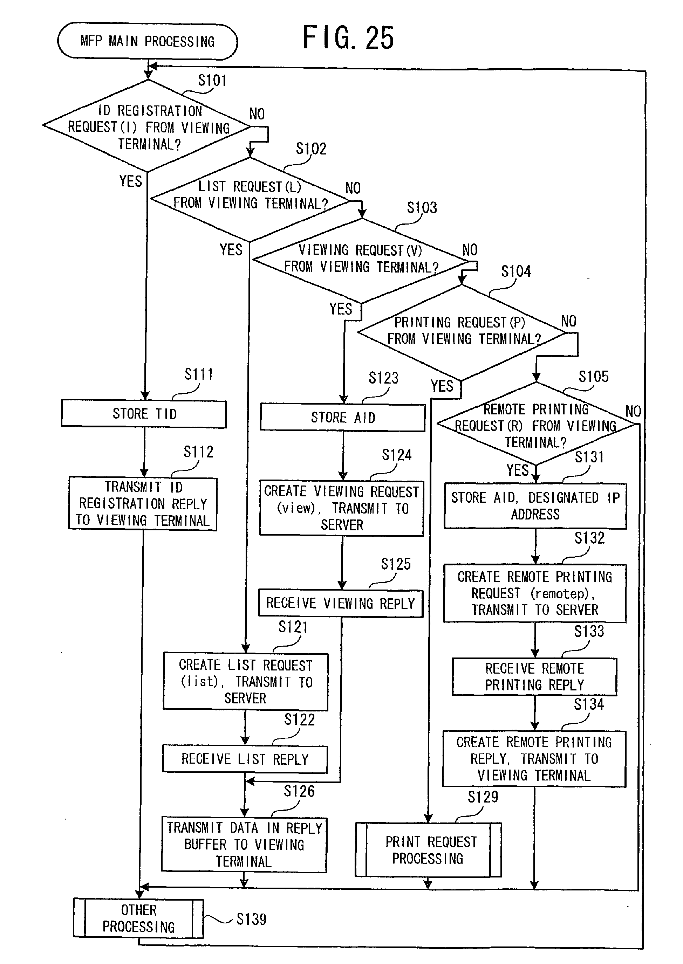

Next, the operation of the MFP 2 will be explained with reference to the flowcharts in FIGS. 25 to 27.

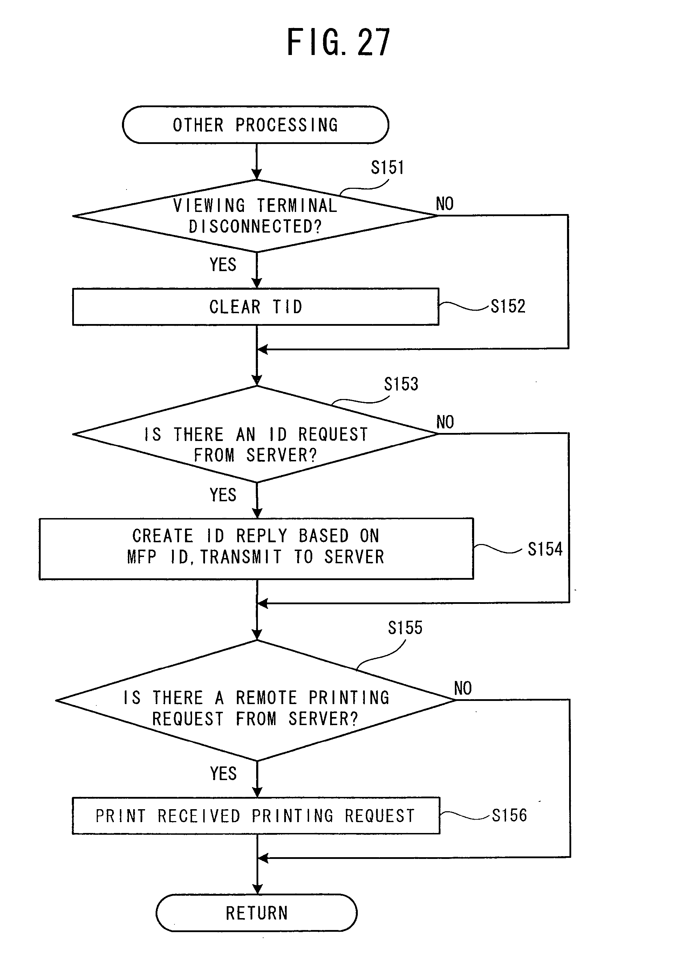

When the electric power to the MFP 2 is turned on, initial processing such as initialization of the various storage areas, checking of connection to the Internet 5, and the like is performed, after which MFP main processing starts. First, a determination is made as to whether or not an ID registration request (I) has been received (S101). If the ID registration request (I) has been received and has been stored in the viewing terminal request buffer storage area 224 (YES at S101), the viewing terminal ID (the TID) that is included in the ID registration request (I) is stored in the connected viewing terminal ID storage area 221 of the RAM 22 (S111). Next, an ID registration reply that includes a reply status code of "200 OK", indicating a normal status, as well as the IP address of the MFP 2, is created and stored in the viewing terminal reply buffer storage area 225, and the created ID registration reply is transmitted to the viewing terminal 1 (S112). Next, other processing is performed (S139; refer to FIG. 27). The other processing will be explained later with reference to the flowchart in FIG. 27. When the other processing ends (S 139), the processing returns to S101.

In a case where the ID registration request (I) has not been received (NO at S101), a determination is made as to whether or not a list request (L) has been received (S102). If the list request (L) has been received and has been stored in the viewing terminal request buffer storage area 224 (YES at S 102), a list request (list) is created to be transmitted to the authentication server 3. The created list request (list) is stored in the authentication server request buffer storage area 226 and is transmitted to the authentication server 3 (S121). The list request (list) is a request to the authentication server 3 to acquire a list of the most recent content. Accordingly, the list request (list) includes the currently connected viewing terminal ID (the TID) that is stored in the connected viewing terminal ID storage area 221 of the RAM 22, the MFP 2's MFP ID (the MID) that is stored in the MFP ID storage area 231 of the EEPROM 23, and a command (list) that indicates the request for the list.

Next, receiving processing is performed for a list reply from the authentication server 3 (S122). When the list reply is received from the authentication server 3, it is stored in the authentication server reply buffer storage area 227 of the RAM 22. Next, the data that is stored in the authentication server reply buffer storage area 227 is transmitted to the viewing terminal 1 (S126). Next, the other processing is performed (S139; refer to FIG. 27), and the processing returns to S101.

In a case where the list request (L) has not been received (NO at S102), a determination is made as to whether or not a viewing request (V) has been received (S103). If a viewing request (V) has been received and has been stored in the viewing terminal request buffer storage area 224 (YES at S103), the content ID (the AID) that is included in the viewing request (V) is stored in the designated content ID storage area 222 of the RAM 22 (S123). Next, a viewing request (view) to be transmitted to the authentication server 3 is created and stored in the authentication server request buffer storage area 226, and the created viewing request (view) is transmitted to the authentication server 3 (S124). The viewing request (view) is a request to the authentication server 3 to acquire the text of the content. Accordingly, the viewing request (view) includes the currently connected viewing terminal ID (the TID) that is stored in the connected viewing terminal ID storage area 221 of the RAM 22, the MFP 2's MFP ID (the MID) that is stored in the MFP ID storage area 231 of the EEPROM 23, the content ID (the AID) that is stored in the designated content ID storage area 222 of the RAM 22, and a command (view) that indicates the request for viewing.

Next, receiving processing is performed for a viewing reply from the authentication server 3 (S125). When the viewing reply is received from the authentication server 3, it is stored in the authentication server reply buffer storage area 227 of the RAM 22. Next, the data that is stored in the authentication server reply buffer storage area 227 is transmitted to the viewing terminal 1 (S126). Next, the other processing is performed (S139; refer to FIG. 27), and the processing returns to S101.

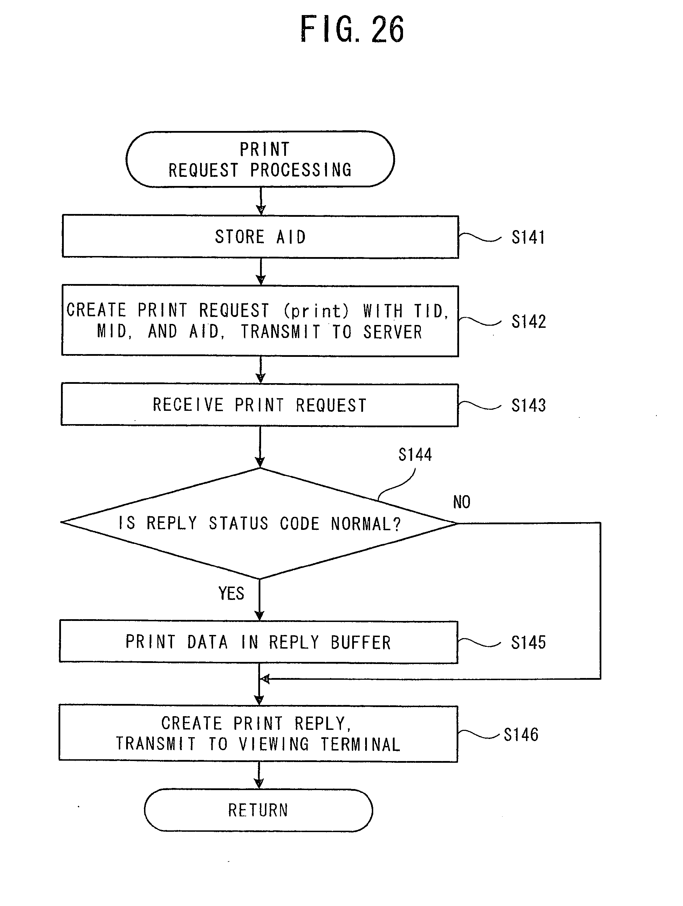

In a case where the viewing request (V) has not been received (NO at S103), a determination is made as to whether or not a printing request (P) has been received (S104). If a printing request (P) has been received and has been stored in the viewing terminal request buffer storage area 224 (YES at S104), printing request processing is performed (S129; refer to FIG. 26).

In the printing request processing, as shown in FIG. 26, the content ID (the AID) that is included in the printing request (V) is stored in the designated content ID storage area 222 of the RAM 22 (S141). Next, a printing request (print) to be transmitted to the authentication server 3 is created and stored in the authentication server request buffer storage area 226, and the created printing request (print) is transmitted to the authentication server 3 (S142). The printing request (print) is a request to the authentication server 3 for permission to print the content. Accordingly, the printing request (print) includes the viewing terminal ID (the TID) that is stored in the connected viewing terminal ID storage area 221 of the RAM 22, the MFP 2's MFP ID (the MID) that is stored in the MFP ID storage area 231 of the EEPROM 23, the content ID (the AID) that is stored in the designated content ID storage area 222 of the RAM 22, and a command (print) that indicates the request for permission to print.

Next, receiving processing is performed for a printing reply from the authentication server 3 (S143). When the printing reply is received from the authentication server 3, it is stored in the authentication server reply buffer storage area 227 of the RAM 22. Next, a determination is made as to whether or not a reply status code in the received printing reply is normal (S 144). As was explained in the example of the printing reply 303 that is shown in FIG. 19, the first line of the printing reply is the reply code and indicates the result of the processing of the request. Accordingly, the determination is made as to whether or not the reply status code at the end of the first line is "200 OK", indicating a normal result. If the reply status code is normal (YES at S 144), the data in the printing reply that is stored in the authentication server reply buffer storage area 227 is printed by the recording portion 28 (S145). If the reply status code is not normal (NO at S144), printing is not performed.

Next, the printing reply that will be transmitted to the viewing terminal 1 is created using the reply status code in the printing reply that is stored in the authentication server reply buffer storage area 227, the created printing reply is stored in the viewing terminal reply buffer storage area 225 and is transmitted to the viewing terminal 1 (S 146). Then the printing request processing ends, and control returns to the MFP main processing. Next, the other processing is performed (S139; refer to FIG. 27), and the processing returns to S 101.

In the MFP main processing in FIG. 26, in a case where the printing request (P) has not been received (NO at S104), a determination is made as to whether or not a remote printing request (P) has been received (S105). If a remote printing request (R) has been received and has been stored in the viewing terminal request buffer storage area 224 (YES at S 105), the content ID (the AID) that is included in the remote printing request (R) is stored in the designated content ID storage area 222, and the designated IP address is stored in the designated IP address storage area 223 (S131).

Next, a remote printing request (remotep) to be transmitted to the authentication server 3 is created and stored in the authentication server request buffer storage area 226, and the created remote printing request (remotep) is transmitted to the authentication server 3 (S 132). The remote printing request (remotep) is a request to the authentication server 3 for permission to print the content. Accordingly, the remote printing request (remotep) includes the currently connected viewing terminal ID (the TID) that is stored in the connected viewing terminal ID storage area 221, the MFP 2's MFP ID (the MID) that is stored in the MFP ID storage area 231, the content ID (the AID) that is stored in the designated content ID storage area 222, the designated IP address that is stored in the designated IP address storage area 223, and a command (remotep) that indicates the request for permission to print in the MFP 2 at the designated IP address.

Next, receiving processing is performed for a remote printing reply from the authentication server 3 (S133). When the remote printing reply is received from the authentication server 3, it is stored in the authentication server reply buffer storage area 227 of the RAM 22. In the same manner as in the example of the printing reply 303 that is shown in FIG. 19, the first line of the remote printing reply is the reply code and indicates the result of the processing of the request. Next, the remote printing reply that will be transmitted to the viewing terminal 1 is created using the reply status code in the remote printing reply that is stored in the authentication server reply buffer storage area 227, the created remote printing reply is stored in the viewing terminal reply buffer storage area 225 and is transmitted to the viewing terminal 1 (S 134). Then the remote printing request processing ends, and control returns to the MFP main processing. Next, the other processing is performed (S139; refer to FIG. 27), and the processing returns to S101.

Next, the other processing will be explained with reference to the flowchart in FIG. 27. In the other processing, as shown in FIG. 27, first a determination is made as to whether or not the connection with the viewing terminal 1 has been cut off (S 151). A query is made to the USB controller 27, and if the viewing terminal 1 is disconnected, it is determined that the connection has been cut off (YES at S151), and the connected viewing terminal ID storage area 221 of the RAM 22 is cleared (S 152). On the other hand, in a case where the MFP 2 is connected to the viewing terminal 1 (NO at S151), nothing is done.

Next, a determination is made as to whether or not an ID request has been received from the authentication server 3 (S 153). If an ID request has been received from the authentication server 3 and if the ID request has been stored in the authentication server reply buffer storage area 227 of the RAM 22 (YES at S153), an ID reply to be transmitted to the authentication server 3 is created and is stored in the authentication server request buffer storage area 226. The created ID reply is then transmitted to the authentication server 3 (S154). I ID reply, in response to the request from the authentication server 3, provides the MFP ID of the MFP 2 to the authentication server 3. Accordingly, the ID reply includes the MFP 2's MFP ID that is stored in the MFP ID storage area 231 of the EEPROM 23, as well as a command that indicates that the MFP ID is being provided. On the other hand, if the ID request has not been received (NO at S 153), nothing is done.

Next, a determination is made as to whether or not a remote printing request has been received from the authentication server 3 (S155). If a remote printing request has been received from the authentication server 3 and if the remote printing request has been stored in the authentication server reply buffer storage area 227 of the RAM 22 (YES at S155), the data in the remote printing reply that is stored in the authentication server reply buffer storage area 227 is printed by the recording portion 28 (S156). On the other hand, if the remote printing request has not been received (NO at S155), nothing is done.

As explained above, a check of the connection with the viewing terminal 1, a reply to the ID request from the authentication server 3, and printing in response to a remote printing request are all carried out in the other processing.

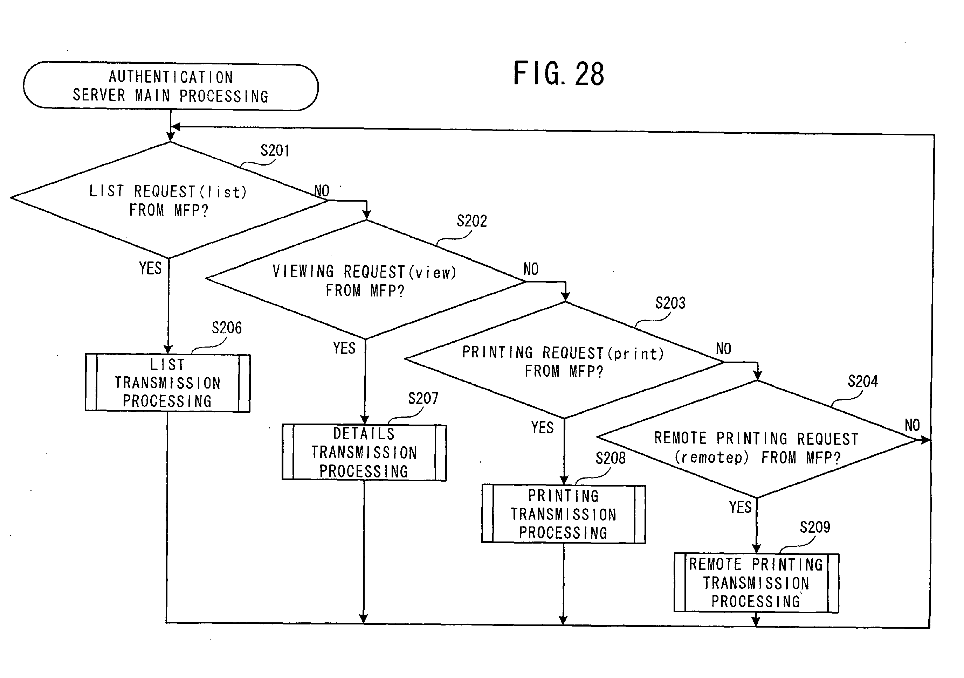

Next, the operation of the authentication server 3 will be explained with reference to the flowcharts in FIGS. 28 to 32.

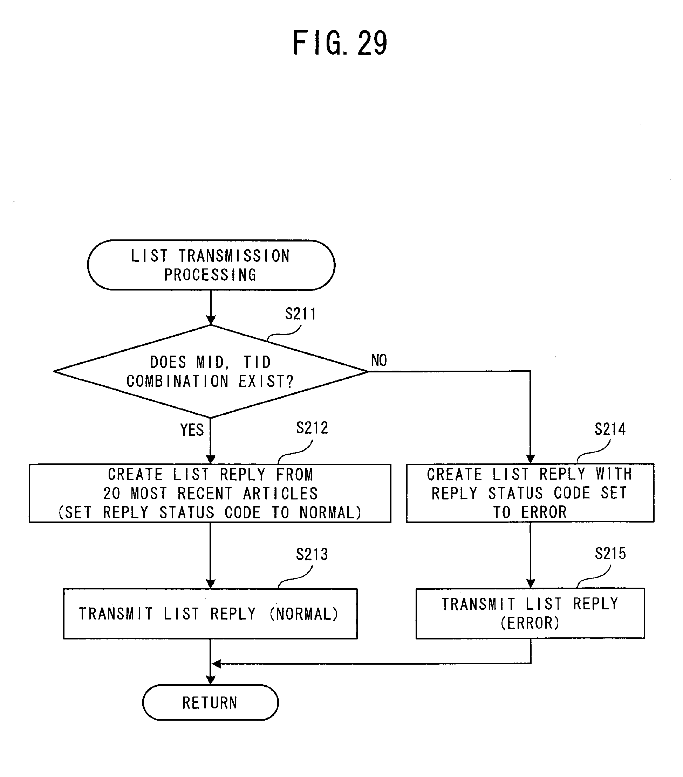

When the electric power to the authentication server 3 is turned on, initial processing such as initialization of the various storage areas, checking of connection to the Internet 5, and the like is performed, after which authentication server main processing starts. First, a determination is made as to whether or not a list request (list) has been received from the MFP 2 through the Internet 5 (S201). If a list request (list) has been received and has been stored in the receiving buffer storage area 323 of the RAM 32 (YES at S201), list transmission processing is performed (S206; refer to FIG. 29).

In the list transmission processing, as shown in FIG. 29, a determination is made as to whether or not the combination of the MFP ID (the MID) and the viewing terminal ID (the TID) that are included in the list request (list) is registered in an authentication table that is stored in the authentication table storage area 331 of the hard disk device 33 (refer to FIG. 10) (S211). If the combination is registered in the authentication table (YES at S211), the list of the most recent content may be transmitted to the viewing terminal 1 that is connected through the MFP 2, so the list reply is created (S212). The list reply is the reply to the request from the viewing terminal 1 to acquire the list of the most recent content, and the list reply 301 that is shown in FIG. 17 is one example of it. Specifically, the processing refers to a content management table that is stored in the content management table storage area 332 of the hard disk device 33, reads the first to the twentieth content IDs and titles in the content management table, and stores them in the transmission buffer storage area 325. Next, the reply status code is set to normal. Then the list reply is transmitted to the MFP 2 (S213). Then control returns to the authentication server main processing, and the processing returns to S201.

On the other hand, if the combination of the MFP ID and the viewing terminal ID is not registered in the authentication table (NO at S211), the list reply is created with the reply status code set to error, and it is stored in the transmission buffer storage area 325 (S214). The list reply is then transmitted to the MFP 2 (S215). Then control returns to the authentication server main processing, and the processing returns to S201.

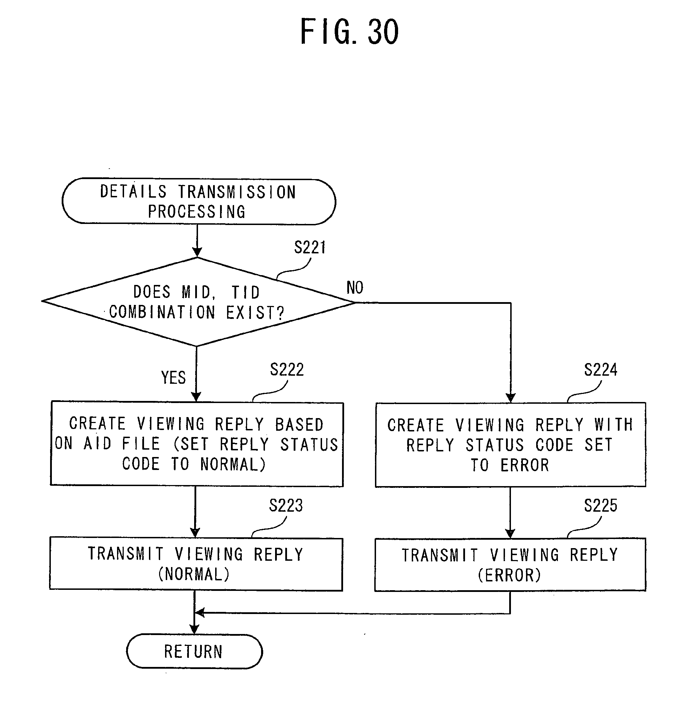

In the authentication server main processing, as shown in FIG. 28, if a list request (list) has not been received from the MFP 2 (NO at S201), a determination is made as to whether or not a viewing request (view) has been received from the MFP 2 (S202). If a viewing request (view) has been received and the viewing request (view) has been stored in the receiving buffer storage area 323 of the RAM 32 (YES at S202), details transmission processing is performed (S207; refer to FIG. 30).

In the details transmission processing, as shown in FIG. 30, a determination is made as to whether or not the combination of the MFP ID (the MID) and the viewing terminal ID (the TID) that are included in the viewing request (view) is registered in the authentication table that is stored in the authentication table storage area 331 of the hard disk device 33 (refer to FIG. 10) (S221). If the combination is registered in the authentication table (YES at S221), the text of the content may be transmitted to the viewing terminal 1 through the MFP 2, so the viewing reply is created (S222). The viewing reply is the reply to the request from the viewing terminal 1 to acquire the text of the designated content, and the viewing reply 302 that is shown in FIG. 18 is one example of it. Specifically, the content ID (the AID) that is included in the viewing request (view) is stored along with the 〈ID〉 tag in the transmission buffer storage area 325. Next, the title for the content ID (the AID) is read from the content management table storage area 332. Then the title is stored along with the 〈TITLE〉 tag in the transmission buffer storage area 325. Next, the file name for the content ID (the AID) is read from the content management table storage area 332. Then the data in the file is referenced, and only the first paragraph is stored along with the 〈BODY〉 tag in the transmission buffer storage area 325. Next, the reply status code is set to normal. Then the viewing reply is transmitted to the MFP 2 (S223). Then control returns to the authentication server main processing, and the processing returns to S201.

On the other hand, if the combination of the MFP ID and the viewing terminal ID is not registered in the authentication table (NO at S221), the viewing reply is created with the reply status code set to error, is stored in the transmission buffer storage area 325 (S224), and is then transmitted to the MFP 2 (S225). Then control returns to the authentication server main processing, and the processing returns to S201.

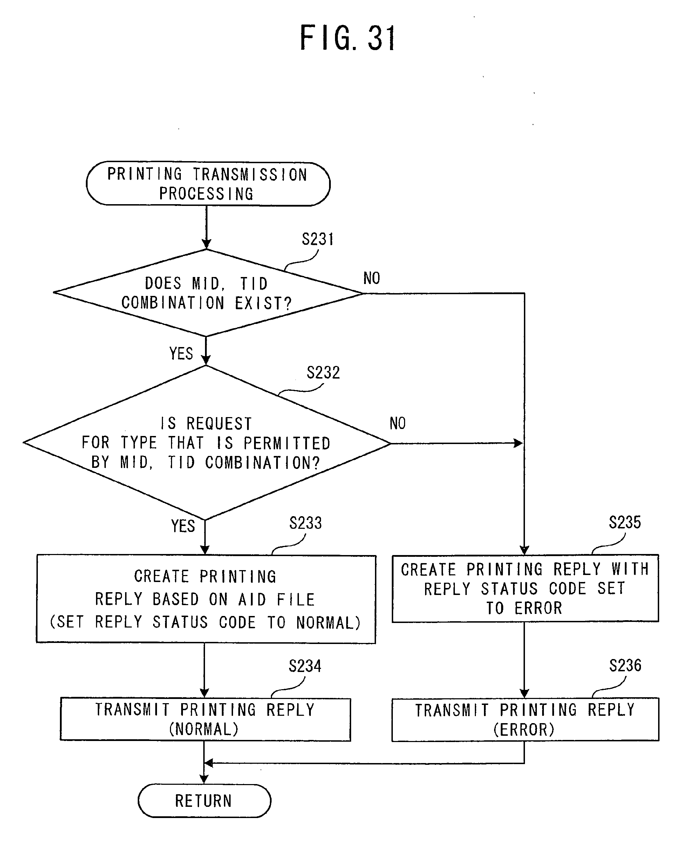

In the authentication server main processing, as shown in FIG. 28, if a viewing request (view) has not been received from the MFP 2 (NO at S202), a determination is made as to whether or not a printing request (print) has been received from the MFP 2 (S203). If a printing request (print) has been received and the printing request (print) has been stored in the receiving buffer storage area 323 of the RAM 32 (YES at S203), printing transmission processing is performed (S208; refer to FIG. 31).

In the printing transmission processing, as shown in FIG. 31, a determination is made as to whether or not the combination of the MFP ID (the MID) and the viewing terminal ID (the TID) that are included in the printing request (print) is registered in the authentication table that is stored in the authentication table storage area 331 of the hard disk device 33 (refer to FIG. 10) (S231). If the combination is registered in the authentication table (YES at S231), a determination is made as to whether or not the type that is associated with the content for which the request to print has been made is a type for which printing is permitted for the combination of the MFP ID and the viewing terminal ID (S232). Specifically, the type that is associated with the content ID (the AID) for which the request to print has been made is read from the type field of the content management table. Then the types for which printing is permitted for the combination of the MFP ID and the viewing terminal ID are read from the authentication table. In a case where the type that is associated with the content ID matches one of the types from the authentication table, it is determined that printing is permitted for the type (YES at S232). On the other hand, if the types do not match, it is determined that printing is not permitted for the type (NO at S232).

In a case where printing is permitted for the type (YES at S232), printing may be performed, so the printing reply is created (S233). The printing reply is the reply to the request from the viewing terminal 1 for permission to print, and the printing reply 303 that is shown in FIG. 19 is one example of it. Specifically, the content ID (the AID) that is included in the printing request (print) is stored along with the 〈ID〉 tag in the transmission buffer storage area 325. Next, the title for the content ID (the AID) is read from the content management table storage area 332. Then the title is stored along with the 〈TITLE〉 tag in the transmission buffer storage area 325. Next, the file name for the content ID (the AID) is read from the content management table storage area 332. Then the data in the file is referenced, and the entire text is stored along with the 〈BODY〉 tag in the transmission buffer storage area 325. Next, the reply status code is set to normal. Then the printing reply is transmitted to the MFP 2 (S234). Then control returns to the authentication server main processing, and the processing returns to S201,

On the other hand, in a case where the combination of the MFP ID and the viewing terminal ID is not registered in the authentication table (NO at S231), as well as in a case where the type that is associated with the content for which the request to print has been made is not a type for which printing is permitted for the combination of the MFP ID and the viewing terminal ID (NO at S232), printing is not permitted. Accordingly, the viewing reply is created with the reply status code set to error, is stored in the transmission buffer storage area 325 (S235), and is then transmitted to the MFP 2 (S236). Then control returns to the authentication server main processing, and the processing returns to S201.

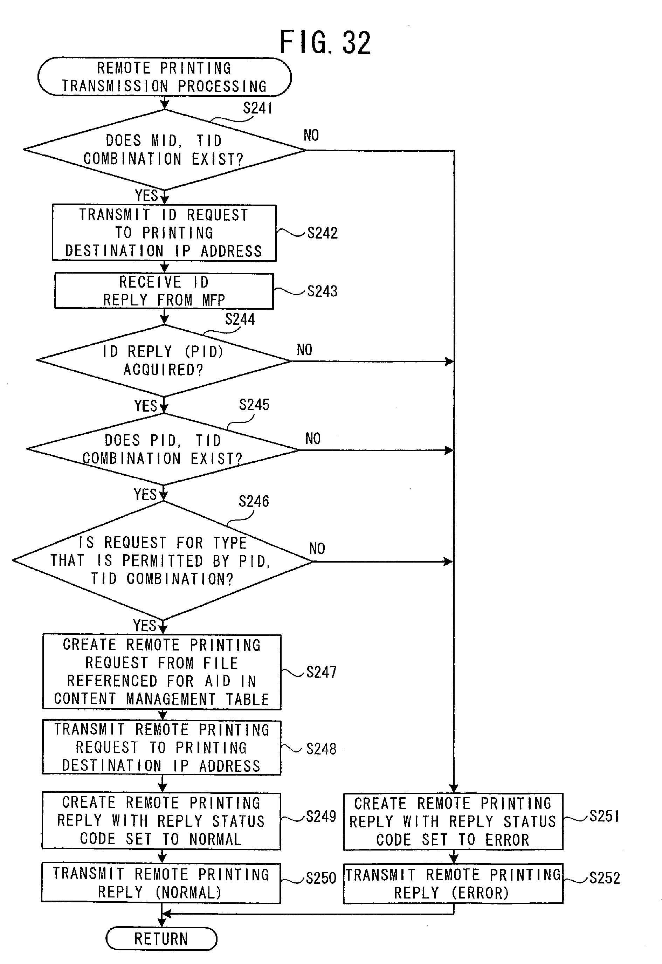

In the authentication server main processing, as shown in FIG. 28, if a printing request (print) has not been received from the MFP 2 (NO at S203), a determination is made as to whether or not a remote printing request (remotep) has been received from the MFP 2 (S204). If a remote printing request (remotep) has been received and the remote printing request (remotep) has been stored in the receiving buffer storage area 323 of the RAM 32 (YES at S204), remote printing transmission processing is performed (S209; refer to FIG. 32).

In the remote printing transmission processing, as shown in FIG. 32, a determination is made as to whether or not the combination of the MFP ID (the MID) and the viewing terminal ID (the TID) that are included in the remote printing request (remotep) is registered in the authentication table that is stored in the authentication table storage area 331 of the hard disk device 33 (refer to FIG. 10) (S241).

If the combination is registered in the authentication table (YES at S241), an ID request is transmitted to the designated IP address that is included in the remote printing request (remotep), that is, to the MFP 2 that is the printing destination (S242). Receiving processing is then performed for an ID reply from the MFP 2 (S243). When the MFP 2 receives the ID request, it transmits its own MFP ID as the ID reply (FIG. 27, S153, S154), and the authentication server 3 receives the ID reply and stores it in the receiving buffer storage area 323. In a case where the ID reply is not received from the MFP 2, or where the MFP ID is not included in the received data, the MFP ID (the PID) of the MFP 2 at the designated IP address is not acquired (NO at S244), so printing is not performed. Accordingly, a remote printing reply is created with the reply status code set to error, is stored in the transmission buffer storage area 325 (S251), and is then transmitted to the MFP 2 (S252). Then control returns to the authentication server main processing, and the processing returns to S201.

On the other hand, if the ID reply is received normally from the MFP 2 and the MFP ID (the PID) of the MFP 2 at the designated IP address is acquired (YES at S244), a determination is made as to whether or not the combination of the MFP ID (the PID) of the MFP 2 at the designated IP address and the viewing terminal ID (the TID) is registered in the authentication table (S245). If the combination is not stored in the authentication table (NO at S245), printing is not permitted. Accordingly, the remote printing reply is created with the reply status code set to error, is stored in the transmission buffer storage area 325 (S251), and is then transmitted to the MFP 2 (S252). Then control returns to the authentication server main processing, and the processing returns to S201.

On the other hand, if the combination is stored in the authentication table (YES at S245), a determination is made as to whether or not the type that is associated with the content for which the request to print has been made is a type for which printing is permitted for the combination of the MFP ID (the PID) and the viewing terminal ID (S246). Specifically, the type that is associated with the content ID (the AID) for which the request to print has been made is read from the type field of the content management table. Then the types for which printing is permitted for the combination of the MFP ID (the PID) of the MFP 2 at the designated IP address and the viewing terminal ID are read from the authentication table. In a case where the type that is associated with the content ID matches one of the types from the authentication table, it is determined that printing is permitted for the type (YES at S246). On the other hand, if the types do not match, it is determined that printing is not permitted for the type (NO at S246).

In a case where printing is permitted for the type (YES at S246), printing may be performed, so the remote printing request is created (S247). The remote printing request is a command to the MFP 2 at the designated IP address to print, in response to the request from the viewing terminal 1 for remote printing. Specifically, the content ID (the AID) that is included in the remote printing request (remotep) is stored along with the 〈ID〉 tag in the transmission buffer storage area 325. Next, the title for the content ID (the AID) is read from the content management table storage area 332. Then the title is stored along with the 〈TITLE〉 tag in the transmission buffer storage area 325. Next, the file name for the content ID (the AID) is read from the content management table storage area 332. Then the data in the file is referenced, and the entire text is stored along with the 〈BODY〉 tag in the transmission buffer storage area 325. The remote printing request (remotep) is then transmitted to the MFP ID (the PID) of the MFP 2 at the designated IP address (S248). A command is appended that indicates the remote printing request.

Next, a remote printing reply is created with the reply status code set to normal (S249). The remote printing reply is a response to the request from the viewing terminal 1 for remote printing and provides the result of the processing of the request. In the present embodiment, only the reply status code is used, and no particular data is included in the data portion. The remote printing reply is transmitted to the MFP 2 that transmitted the remote printing request (remotep) (S250), after which control returns to the authentication server main processing, and the processing returns to S201.

On the other hand, in a case where the type that is associated with the content for which remote printing has been requested is not a type for which printing is permitted for the combination of the MFP ID and the viewing terminal ID (NO at S246), printing is not permitted. Accordingly, the remote printing reply is created with the reply status code set to error, is stored in the transmission buffer storage area 325 (S251), and is then transmitted to the MFP 2 (S252). Then control returns to the authentication server main processing, and the processing returns to S201.

In the authentication server main processing, as shown in FIG. 28, the processing at S201 to S204 is performed repeatedly, and if a request is received from the MFP 2, the corresponding processing is performed.

As explained above, in the printing control system of the present disclosure, if the user connects the viewing terminal 1 to the MFP 2 and issues a command to print in the currently connected MFP 2 the content that is being viewed on the viewing terminal 1 (FIG. 20, YES at S4, YES at S8), the printing request is transmitted to the MFP 2 (FIG. 23, S53). In the MFP 2, the MFP ID of the MFP 2 is appended to the printing request, which is then transmitted to the authentication server 3 (FIG. 26, S142). In the authentication server 3, the determination is made as to whether or not printing of the content is permitted for the combination of the viewing terminal 1 and the MFP 2 (FIG. 31, S231, S232). If the combination of the viewing terminal ID and the MFP ID is stored in the authentication table (YES at S231), and if the type that is associated with the content for which the request to print has been made is registered in the authentication table as a type for which printing is permitted (YES at S232), the printing reply 303 that includes the information for performing printing in the MFP 2 is created (S233) and is transmitted to the MFP 2 (S234). Then printing is performed in the MFP 2 (FIG. 26, S145).

Furthermore, in the printing control system of the present disclosure, it is possible for printing to be performed on a MFP 2 other than the MFP 2 to which the viewing terminal 1 is connected. If the user connects the viewing terminal 1 to the MFP 2 and issues a command to print in a MFP 2 other than the currently connected MFP 2 the content that is being viewed on the viewing terminal 1 (FIG. 20, YES at S4, NO at S8), the printing request, with the IP address for the MFP 2 that is the printing destination appended, is transmitted to the MFP 2 (FIG. 24, S72). The MFP 2 appends its own MFP ID to the printing request and transmits the request to the authentication server 3 (FIG. 25, S 132). In the authentication server 3, the determination is made as to whether or not printing of the content is permitted for the combination of the viewing terminal 1 and the MFP 2 (FIG. 32, S241 to S246). If the combination of the viewing terminal ID and the MFP ID is stored in the authentication table (YES at S241), the MFP ID is acquired from the MFP 2 that is the printing destination, and a determination is made as to whether the combination of the acquired MFP ID and the viewing terminal ID is stored in the authentication table (S245). If the combination is stored in the authentication table (YES at S245), and if the type that is associated with the content for which the request to print has been made is a type for which printing is permitted (YES at S246), the remote printing request is created that includes the information for performing printing in the MFP 2 (S247). The remote printing request is then transmitted to the MFP 2 that is the printing destination (S248). Then printing is performed in the MFP 2 that is the printing destination (FIG. 27, S 156).

Thus, the authentication of the request from the viewing terminal 1 to print the content is not only the authentication of the viewing terminal ID, but is also carried out for the combination of the viewing terminal 1 and the MFP 2 that is the printing destination, so it is possible to control printing of the content more precisely. For example, for the MFP 2 at the office, control can be exercised such that printing is permitted only for the types of content that are related to work, such as "politics", "economy", and the like, and printing is not permitted for the types of content that are not related to work, such as "sports", "gourmet", and the like.

Note that the printing control system of the present disclosure is not limited to the embodiment that is described above, and it is obvious that various types of modifications can be made within the scope of the present disclosure. In the embodiment that is described above, the viewing terminal ID is used as user identification information, but information that is assigned to the user (a user ID) may also be used instead of information that is assigned to the viewing terminal. Further, in the embodiment that is described above, the viewing terminal ID is stored in the viewing terminal ID storage area 131 of the EEPROM 13 of the viewing terminal 1, and it is read from the viewing terminal ID storage area 131 in a case where the viewing terminal ID is required, but the system may also be configured such that the user is allowed to input the viewing terminal ID or a user ID.

Furthermore, in the embodiment that is described above, when the viewing terminal 1 is connected to the MFP 2, the viewing terminal 1 transmits the ID registration request that includes its own viewing terminal ID, and the viewing terminal ID of the currently connected viewing terminal 1 is stored in the MFP 2. However, even if the viewing terminal 1 does not transmit its viewing terminal ID to the MFP 2 when it is first connected, it may also include its viewing terminal ID when it transmits the printing request (P). the remote printing request (R), the list request (L), and the viewing request (V).

In the embodiment that is described above, the content information is stored in the content information storage area 191 of the memory card 19, but it is obviously acceptable for the storage area that stores the content information not to be in a removable storage device such as a memory card. A flash memory may also be provided in the viewing terminal 1, and the storage area may be provided in the flash memory.

In addition, in the embodiment that is described above, in a case where the command to print (the remote printing request) is issued to a MFP 2 other than the MFP 2 that is connected to the viewing terminal 1, the authentication is performed for the terminal combination of the viewing terminal 1 and the MFP 2 that is connected when the command is issued (FIG. 32, S241). However, it is also acceptable to perform the authentication (S245) only for the terminal combination of the viewing terminal 2 and the MFP 2 that is the printing destination, and not to perform the authentication for the connected MFP 2.

Further, in the embodiment that is described above, the condition that is used as the condition for permitting printing is that the type that is associated with the content for which the printing request has been made is one of the types that is registered in advance in the authentication table (refer to FIG. 10). Moreover, the authentication table that is stored in the authentication table storage area 3310 that is shown in FIG. 10 is used as authentication information. However, the condition for permitting printing is not limited to this example, and other conditions may also exist.

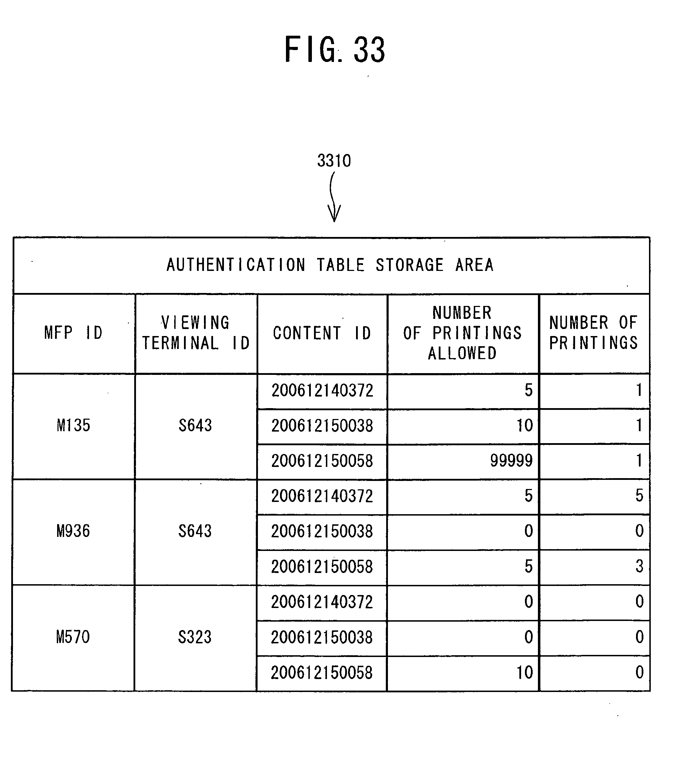

For example, a number of times that printing is allowed may be stored for each article of content, and printing may be permitted up to that number of times. In that case, an authentication table may be used that is stored in an authentication table storage area 3310 that is shown in FIG. 33. The authentication table is provided with a MFP ID field, a viewing terminal ID field, a content ID field, a number of printings allowed field, and a number of printings field. The MFP ID is stored in the MFP ID field, the viewing terminal ID is stored in the viewing terminal ID field, and the content ID is stored in the content ID field. The number of times that printing is permitted is stored in the number of printings allowed field, and the total number of times that the permission to print has actually been granted is stored in the number of printings field.

In this sort of case, in the embodiment that is described above, in the printing transmission processing (S31) that is performed in the authentication server 3, the number of printings is determined at S232, instead of the determination of the type of the content for which the request to print has been made. Specifically, the number of printings that is allowed for the content ID (the AID) of the content for which printing has been requested, with respect to the combination of the MFP ID (the MID) and the viewing terminal ID (the TID), is read from the authentication table storage area 3310. The actual number of printings is also read and is compared to the number of printings allowed. If the number of printings is not less than the number of printings allowed, a determination is made that printing will not be permitted, and the printing reply is created with the reply status code set to error. If the number of printings is less than the number of printings allowed, a determination is made that printing will be permitted, and the printing reply is created with the reply status code set to normal. Note also that 1 is added to the number of printings. It is also obvious that the control according to the type and the control according to the number of printings may also be used jointly.

In the example that is shown in FIG. 33, for the terminal combination of the MFP ID M135 and the viewing terminal ID S643, five printings are allowed for the content ID 200612140372, and one printing has already been performed. Ten printings are allowed for the content ID 200612150038, and one printing has already been performed. An unlimited number of printings are allowed for the content ID 200612150058, and one printing has already been performed. For the terminal combination of the MFP ID M936 and the viewing terminal ID S643, five printings are allowed for the content ID 200612140372, and five printing have already been performed. Accordingly, no more printing can be performed. For the content ID 200612150038, the number of printings allowed is zero. In other words, printing is not permitted. The number of printings is also zero. Five printings are allowed for the content ID 200612150058, and three printings have already been performed. For the terminal combination of the MFP ID M570 and the viewing terminal ID S323, the number of printings allowed for the content ID 200612140372 is zero. In other words, printing is not permitted. The number of printings is also zero. For the content ID 200612150038, the number of printings allowed is zero. In other words, printing is not permitted. The number of printings is also zero. Ten printings are allowed for the content ID 200612150058, and printing has not been performed even once.

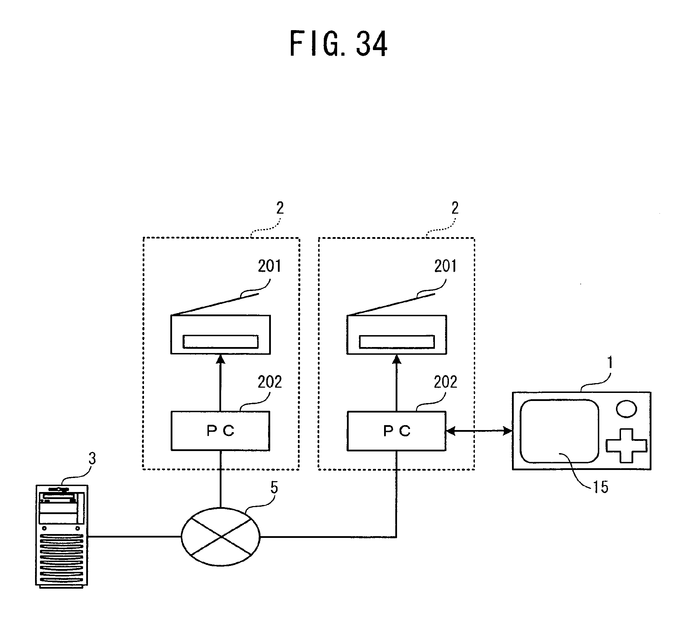

In the embodiment that is described above, the MFP 2 that is used is an apparatus that, as the printing apparatus, is provided with printing means (the recording portion 28) that prints on a printable medium, first printing apparatus connecting means (the USB controller 27) that connects to the viewing terminal 1, and second printing apparatus connecting means (the LAN controller 29) that connects to the Internet 5 in order to connect to the authentication server 3, but it is not necessary for the printing apparatus to be configured as a single terminal. For example, as shown in FIG. 34, the MFP 2 may also be configured from a personal computer (PC) 22 and a printer 201 that is connected to the PC 202. In this case, the first printing apparatus connecting means and the second printing apparatus connecting means are provided in the PC 202, and the printing means is provided in the printer 201. In this configuration, it is acceptable for the printer 201 not to be provided with any special functions and to be configured only with the functions of an ordinary printer that connects to the PC 202. It is also acceptable for the PC 202 to be provided with the many functions with which an ordinary personal computer is provided, such as a function for connecting to the Internet 5, a function that connects another apparatus, such as a USB controller or the like, and a function that connects a printer. Accordingly, in the case of this sort of terminal configuration, the PC 202 can be made to function as the printing apparatus in the printing control system of the present disclosure, simply by installing a printing program in the PC 202. It is therefore possible to cause the PC 202 to function as the printing apparatus in the printing control system of the present disclosure at a low cost.

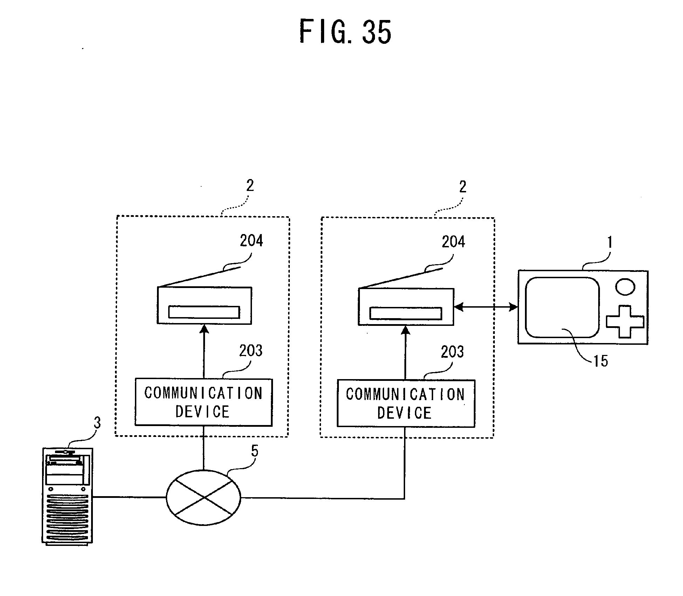

Further, as shown in FIG. 35, a printer 204 may also be provided as the first printing apparatus connecting means that connects to the viewing terminal 1 and as the printing means, and a communication apparatus 203 may also be provided as the second printing apparatus connecting means that connects to the Internet 5, with the printer 201 and the communication apparatus 203 being connected to one another. In this case, the printer 204 may also be provided with generally used functions that connect to the communication apparatus 203 for connecting to the Internet 5 (a terminal adaptor, a modem, a router, and the like), and a printing program may also be installed in the printer 204.

In the printing control system of the present disclosure, in the viewing terminal, display data storage means can store display data for displaying the content on a display screen, and user identification information acquisition means can acquire user identification information that identifies the user. Printing apparatus identification information acquisition means can acquire printing apparatus identification information that identifies the printing apparatus that is the output destination where printing of the content will be performed, and print command means can issue a command to print the content for which the display data is stored in the display data storage means. Viewing terminal connecting means can connect to the printing apparatus. In a case where the print command has been issued by the print command means, print request transmission means can transmit, from the viewing terminal connecting means to the printing apparatus, content identification information that identifies the content for which the print command has been issued and the printing apparatus identification information that has been acquired by the printing apparatus identification information acquisition means. In the printing apparatus, the first printing apparatus connecting means can connect to the viewing terminal, and the second printing apparatus connecting means can connect to the authentication server through a network. User identification information acquisition means can acquire, from the viewing terminal, the user identification information that identifies the user. Authentication request transmission means can transmit, from the second printing apparatus connecting means to the authentication server, the user identification information that has been acquired from the viewing terminal by the user identification information acquisition means, as well as the printing apparatus identification information and the content identification information. In the authentication server, authentication server connecting means can connect to the printing apparatus, and authentication information storage means can store, separately for each combination of the user and the printing apparatus that is the output destination, authentication information that is associated with a permission condition for permitting printing of the content. In a case where the user identification information, the content identification information, and the printing apparatus identification information have been received from the printing apparatus by the authentication server connecting means, authentication determination means can make the determination of whether or not to permit printing of the content that is identified by the content identification information for the combination of the user who is identified by the user identification information and the printing apparatus that is identified by the printing apparatus identification information, the determination being based on the authentication information that is stored in the authentication information storage means. In a case where it has been determined by the authentication determination means that printing will be permitted, print command information transmission means can transmit, from the authentication server connecting means to the printing apparatus that is identified by the printing apparatus identification information, print command information that commands the printing apparatus to print. In addition, in a case where the print command information has been received from the second printing apparatus connecting means, printing control means in the printing apparatus can cause printing to be performed by the printing means. Therefore, printing of the content can be controlled for the combination of the user and the printing apparatus that performs the printing. Accordingly, in the printing of the content, it is possible to restrict printing not only with respect to the user, but also with respect to the printing apparatus, so it is possible to make printing of the content possible only in the case of a specific user and a specific printing apparatus. Accordingly, printing of the content can be controlled flexibly in conjunction with the user's use environment.

In the printing control system of the present disclosure, each of the articles of content can be classified into a type according to its subject matter, and the authentication information storage means can also store, separately for each combination of the user and the printing apparatus that is the output destination, authentication information that is associated with the type for which printing is permitted and that serves as a permission condition. In a case where the type of the content that is identified by the content identification information is a type that is associated with the combination of the user identification information and the printing apparatus identification information in the authentication information, the authentication determination means can permit printing. It is therefore possible to designate, according to the type of the content, the printing apparatus for which printing is permitted for each user, making it easier to perform control of the printing, because it is not necessary to make a setting for each individual article of content.

In the printing control system of the present disclosure, the authentication information storage means can also store, separately for each combination of the user, the printing apparatus that is the output destination, and the article of content, authentication information that is associated with a number of printings that are allowed and that serves as a permission condition. In the authentication server, number of printings counting means can count the number of times that printing of the content has been permitted for each combination of the user, the printing apparatus that is the output destination, and the article of content. In a case where the number of printings that has been counted by the number of printings counting means is less than the number of printings allowed in the authentication information, the authentication determination means can permit printing. It is therefore possible for control of printing to be performed more flexibly, because the number of printings allowed for each article of content can be set for each combination of the printing apparatus and the user.

In the viewing terminal of the present disclosure, the display data storage means can store the display data for displaying the content on the display screen, and the user identification information acquisition means can acquire the user identification information that identifies the user. The printing apparatus identification information acquisition means can acquire the printing apparatus identification information that identifies the printing apparatus that is the output destination where printing of the content will be performed, and the print command means can issue the command to print the content for which the display data is stored in the display data storage means. The viewing terminal connecting means can connect to the printing apparatus. In a case where the print command has been issued by the print command means, the print request transmission means can transmit, from the viewing terminal connecting means to the printing apparatus, the content identification information that identifies the content for which the print command has been issued and the printing apparatus identification information that has been acquired by the printing apparatus identification information acquisition means. Therefore, when printing is performed, the printing can be performed after the authentication of the content has been performed in relation to the user and the printing apparatus. Accordingly, the printing can be performed with the authentication server performing control for the combination of the user and the printing apparatus that will perform the printing.

The viewing program of the present disclosure can cause a computer to function as each type of processing means of the viewing terminal. Therefore, the same sort of effects as those of the viewing terminal of the present disclosure can be achieved.

In the printing apparatus of the present disclosure, the first printing apparatus connecting means can connect to the viewing terminal, and the second printing apparatus connecting means can connect to the authentication server. The user identification information acquisition means can acquire, from the viewing terminal, the user identification information that identifies the user. The authentication request transmission means can transmit, from the second printing apparatus connecting means to the authentication server, the content identification information that identifies the content for which the print command was issued and the printing apparatus identification information that identifies the printing apparatus that will perform the printing, both the content identification information and the printing apparatus identification information having been transmitted from the viewing terminal, as well as the user identification information that has been acquired from the viewing terminal by the user identification information acquisition means. In a case where the print command information commands the printing apparatus to print has been received from the second printing apparatus connecting means, the printing control means can cause printing to be performed by the printing means. Therefore, in response to the command to print from the viewing terminal, the authentication server can cause the printing of the content to be controlled for the combination of the user and the printing apparatus that will perform the printing. Accordingly, in the printing of the content, it is possible to restrict printing not only with respect to the user, but also with respect to the printing apparatus, so it is possible to make printing of the content possible only in the case of a specific user and a specific printing apparatus. Accordingly, printing of the content can be controlled flexibly in conjunction with the user's use environment.

The printing program of the present disclosure can cause a computer to function as the authentication request transmission means and the printing control means of the printing apparatus. Therefore, the same sort of effects as those of the printing apparatus of the present disclosure can be achieved.

In the authentication server of the present disclosure, the authentication server connecting means can connect to the printing apparatus, and the authentication information storage means can store, separately for each combination of the user and the printing apparatus that is the output destination, the authentication information that is associated with the permission condition for permitting printing of the content. In a case where the user identification information that identifies the user, the content identification information that identifies the content that has been designated for printing, and the printing apparatus identification information that identifies the printing apparatus that will perform the printing, all of which were transmitted from the printing apparatus, have been received by the authentication server connecting means, the authentication determination means can make the determination of whether or not to permit printing of the content that is identified by the content identification information for the combination of the user who is identified by the user identification information and the printing apparatus that is identified by the printing apparatus identification information, the determination being based on the authentication information that is stored in the authentication information storage means. In a case where it has been determined by the authentication determination means that printing will be permitted, the print command information transmission means can transmit, from the authentication server connecting means to the printing apparatus that is identified by the printing apparatus identification information, the print command information that commands the printing apparatus to print. Therefore, printing of the content can be controlled for the combination of the user and the printing apparatus that performs the printing. Accordingly, in the printing of the content, it is possible to restrict printing not only with respect to the user, but also with respect to the printing apparatus. Therefore, it is possible to make printing of the content possible only in the case of a specific user and a specific printing apparatus, so printing of the content can be controlled flexibly in conjunction with the user's use environment.

In the authentication server of the present disclosure, each of the articles of content can be classified into a type according to its subject matter, and the authentication information storage means can also store, separately for each combination of the user and the printing apparatus that is the output destination, the authentication information that is associated with the type for which printing is permitted and that serves as a permission condition. In a case where the type of the content that is identified by the content identification information is a type that is associated with the combination of the user identification information and the printing apparatus identification information in the authentication information, the authentication determination means can permit printing. It is therefore possible to designate, according to the type of the content, the printing apparatus for which printing is permitted for each user, making it easier to perform control of the printing, because it is not necessary to make a setting for each individual article of content.

In the authentication server of the present disclosure, the authentication information storage means can also store, separately for each combination of the user, the printing apparatus that is the output destination, and the article of content, the authentication information that is associated with the number of printings that are allowed and that serves as a permission condition. The number of printings counting means can count the number of times that printing of the content has been permitted for each combination of the user, the printing apparatus that is the output destination, and the article of content. In a case where the number of printings that has been counted by the number of printings counting means is less than the number of printings allowed in the authentication information, the authentication determination means can permit printing. It is therefore possible for control of printing to be performed more flexibly, because the number of printings allowed for each article of content can be set for each combination of the printing apparatus and the user.

The authentication program of the present disclosure can cause a computer to function as each type of processing means of the authentication server. Therefore, the same sort of effects as those of the authentication server of the present disclosure can be achieved.

## Claims

1. A printing control system that comprises
a plurality of printing apparatuses,
an authentication server, and
a viewing terminal,
each of the printing apparatuses being provided with printing means for performing printing,
the authentication server performing authentication for printing, the printing apparatuses and
the authentication server being connected through a network, and the viewing terminal being provided with a display screen that displays content and being connectable to the printing apparatuses, the printing control system being **characterized in that:**
the viewing terminal includes
display data storage means for storing display data for displaying the content on the display screen,
user identification information acquisition means for acquiring user identification information that identifies a user,
printing apparatus identification information acquisition means for acquiring printing apparatus identification information that identifies the printing apparatus that is an output destination where printing of the content will be performed,
print command means for issuing a command to print the content for which the display data is stored in the display data storage means,
viewing terminal connecting means for connecting to the printing apparatuses, and
print request transmission means for transmitting from the viewing terminal connecting means to the printing apparatuses, in a case where the command to print has been issued by the print command means, content identification information that identifies the content for which the command to print has been issued and the printing apparatus identification information that has been acquired by the printing apparatus identification information acquisition means,
each of the printing apparatuses includes
first printing apparatus connecting means for connecting to the viewing terminal,
second printing apparatus connecting means for connecting to the authentication server through the network,
user identification information acquisition means for acquiring from the viewing terminal the user identification information that identifies the user, and
authentication request transmission means for transmitting, from the second printing apparatus connecting means to the authentication server, the user identification information that has been acquired from the viewing terminal by the user identification information acquisition means, the printing apparatus identification information, and the content identification information, the authentication server includes
authentication server connecting means for connecting to the printing apparatuses,
authentication information storage means for storing, separately for each combination of the user and the printing apparatus that is the output destination, authentication information that is associated with a permission condition for permitting printing of the content,
authentication determination means for determining, in a case where the user identification information, the content identification information, and the printing apparatus identification information have been received from the printing apparatus by the authentication server connecting means, whether to permit printing of the content that is identified by the content identification information for the combination of the user who is identified by the user identification information and the printing apparatus that is identified by the printing apparatus identification information, the determination being based on the authentication information that is stored in the authentication information storage means, and
print command information transmission means for transmitting, from the authentication server connecting means to the printing apparatus that is identified by the printing apparatus identification information, in a case where it has been determined by the authentication determination means that printing will be permitted, print command information that commands the printing apparatus to print, and
each of the printing apparatuses further includes
printing control means for causing printing to be performed by the printing means in a case where the print command information has been received from the second printing apparatus connecting means.

2. The printing control system according to claim 1, **characterized in that:**
the content is classified into a type according to its subject matter,
the authentication information storage means stores, separately for each combination of the user and the printing apparatus that is the output destination, authentication information that is associated with a type for which printing is permitted and that serves as the permission condition, and
the authentication determination means permits printing in a case where the type of the content that is identified by the content identification information is the type that is associated with the combination of the user identification information and the printing apparatus identification information in the authentication information.

3. The printing control system according to either one of claims 1 and 2, **characterized in that:**
the authentication information storage means stores, separately for each combination of the user, the printing apparatus that is the output destination, and the content, authentication information that is associated with a number of printings that are allowed and that serves as the permission condition,
the authentication server further includes number of printings counting means for counting the number of times that printing of the content has been permitted for each combination of the user, the printing apparatus, and the content, and
the authentication determination means permits printing in a case where the number of printings that has been counted by the number of printings counting means is less than the number of printings allowed in the authentication information.

4. A viewing terminal that is provided with a display screen that displays content, the viewing terminal being connectable to a printing apparatus that is provided with printing means for performing printing, the printing apparatus being connected through a network to an authentication server that performs authentication for printing, the viewing terminal being **characterized by** comprising:
display data storage means for storing display data for displaying the content on the display screen,
user identification information acquisition means for acquiring user identification information that identifies a user,
printing apparatus identification information acquisition means for acquiring printing apparatus identification information that identifies the printing apparatus that is an output destination where printing of the content will be performed,
print command means for issuing a command to print the content for which the display data is stored in the display data storage means,
viewing terminal connecting means for connecting to the printing apparatus, and
print request transmission means for transmitting from the viewing terminal connecting means to the printing apparatuses, in a case where the command to print has been issued by the print command means, content identification information that identifies the content for which the command to print has been issued and the printing apparatus identification information that has been acquired by the printing apparatus identification information acquisition means.

5. A viewing program that causes a computer to function as each type of processing means that is described in claim 4.

6. A printing apparatus that is provided with printing means for performing printing, that is connected to a viewing terminal that is provided with a display screen that displays content, and that is connected through a network to an authentication server that performs authentication for printing, the printing apparatus being **characterized by** comprising:
first printing apparatus connecting means for connecting to the viewing terminal,
second printing apparatus connecting means for connecting to the authentication server,
user identification information acquisition means for acquiring from the viewing terminal user identification information that identifies the user,
authentication request transmission means for transmitting, from the second printing apparatus connecting means to the authentication server, content identification information that identifies content for which a print command has been issued and printing apparatus identification information that identifies the printing apparatus that will perform printing, both the content identification information and the printing apparatus identification information having been transmitted from the viewing terminal, as well as the user identification information that has been acquired from the viewing terminal by the user identification information acquisition means, and
printing control means for causing printing to be performed by the printing means in a case where print command information that commands the printing apparatus to print has been received from the second printing apparatus connecting means.

7. A printing program that causes a computer to function as at least the authentication request transmission means and the printing control means that are described in claim 6.

8. An authentication server that performs authentication for printing and that is connected through a network to a printing apparatus that is provided with printing means for performing printing, the printing apparatus being connected to a viewing terminal that is provided with a display screen that displays content, the authentication server being **characterized by** comprising:
authentication server connecting means for connecting to the printing apparatus,
authentication information storage means for storing, separately for each combination of a user and the printing apparatus that is an output destination, authentication information that is associated with a permission condition for permitting printing of the content,
authentication determination means for determining, in a case where user identification information that identifies the user, content identification information that identifies the content that has been designated for printing, and printing apparatus identification information that identifies the printing apparatus that will perform printing, all of which have been transmitted from the printing apparatus, have been received by the authentication server connecting means, whether to permit printing of the content that is identified by the content identification information for the combination of the user who is identified by the user identification information and the printing apparatus that is identified by the printing apparatus identification information, the determination being based on the authentication information that is stored in the authentication information storage means, and
print command information transmission means for transmitting, from the authentication server connecting means to the printing apparatus that is identified by the printing apparatus identification information, in a case where it has been determined by the authentication determination means that printing will be permitted, print command information that commands the printing apparatus to print.

9. The authentication server according to claim 8, **characterized in that:**
the content is classified into a type according to its subject matter,
the authentication information storage means stores, separately for each combination of the user and the printing apparatus that is the output destination, authentication information that is associated with a type for which printing is permitted and that serves as the permission condition, and
the authentication determination means permits printing in a case where the type of the content that is identified by the content identification information is the type that is associated with the combination of the user identification information and the printing apparatus identification information in the authentication information.

10. The authentication server according to either one of claims 8 and 9, **characterized in that:**
the authentication information storage means stores, separately for each combination of the user, the printing apparatus that is the output destination, and the content, authentication information that is associated with a number of printings that are allowed and that serves as the permission condition,
the authentication server further comprising number of printings counting means for counting the number of times that printing of the content has been permitted for each combination of the user, the printing apparatus, and the content, and
the authentication determination means permits printing in a case where the number of printings that has been counted by the number of printings counting means is less than the number of printings allowed in the authentication information.

11. An authentication program that causes a computer to function as each type of processing means that is described in any one of claims 8 to 10.
